# EUROPÄISCHE PATENTSCHRIFT

(11) **EP 3 502 604 B1**
(45) Veröffentlichungstag und Bekanntmachung des Hinweises auf die Patenterteilung: **12.07.2023**
(21) Anmeldenummer: 17209423.7
(22) Anmeldetag: 21.12.2017
(51) Int. Cl.: F26B 5/06, F26B 25/22

(54) **VERWENDUNG EINES PRODUKTSENSORS, VERWENDUNG EINES SETS VON PRODUKTSENSOREN, TROCKNUNGSGEFÄSS UND VERFAHREN ZUM BETRIEB EINES PRODUKTSENSORS**
USE OF A PRODUCT SENSOR, USE OF A SET OF PRODUCT SENSORS, DRYING VESSEL AND METHOD FOR OPERATING A PRODUCT SENSOR
UTILISATION D'UN CAPTEUR DE PRODUIT, UTILISATION D'UN ENSEMBLE DE CAPTEURS DE PRODUIT, RÉCIPIENT DE SÉCHAGE ET PROCÉDÉ DE FONCTIONNEMENT D'UN CAPTEUR DE PRODUIT

(43) Veröffentlichungstag der Anmeldung: 26.06.2019
(73) Patentinhaber: Martin Christ Gefriertrocknungsanlagen GmbH, 37520 Osterode am Harz (DE)
(72) Erfinder: Ostermeier, Sven, 37539 Bad Grund (DE); Umbach, Michael, 37539 Bad Grund (DE); Dill, Martin, 37539 Bad Grund (DE); Harms, Dr.Frank, 37520 Osterode am Harz (DE)
(74) Vertreter: REHBERG HÜPPE + PARTNER

(56) Entgegenhaltungen:
- WO-A1-2009/030760
- WO-A1-2016/123062
- US-A1- 2006 239 331
- US-A1- 2008 272 131
- US-A1- 2015 346 039

## Beschreibung

### TECHNISCHES GEBIET DER ERFINDUNG

Die vorliegende Erfindung betrifft eine besondere Verwendung eines Produktsensors als Gefriertrockner-Produktsensor, mittels dessen während eines Gefriertrocknungsprozesses in einem Gefriertrockner ein Produktparameter des Trocknungsguts gemessen werden kann. Im Folgenden wird bevorzugt auf die Ausbildung des Gefriertrockner-Produktsensors als Gefriertrockner-Temperatursensor Bezug genommen, so dass der gemessene Produktparameter die Temperatur des Trocknungsguts in dem Trocknungsgefäß ist. Die Erfindung umfasst aber auch Ausführungsformen, bei welchen der Gefriertrockner-Produktsensor einen anderen Produktparameter (wie beispielsweise einen Druck oder eine Feuchtigkeit des Trocknungsguts) misst.

Vorzugsweise erfolgt mittels des Gefriertrockner-Produktsensors die Messung des Produktparameters in dem Gefriertrocknungsprodukt in einem beliebigen Trocknungsgefäß, welches ein Gefriertrocknungsprodukt oder mehrere Gefriertrocknungsprodukte bevorraten kann. Um lediglich einige Beispiele zu nennen, kann es sich bei dem Trocknungsgefäß um ein Vial, eine Aufnahmeschale oder auch eine Vertiefung einer Stellfläche des Gefriertrockners handeln. Der Gefriertrockner-Produktsensor kann dabei gegenüber dem Trocknungsgefäß abgestützt oder gehalten sein und sich mit einem Messbereich in das Trocknungsgut erstrecken.

Hierbei erfolgt ein kabelloser Betrieb des Gefriertrockner-Produktsensors, wobei der Gefriertrockner-Produktsensor auch "passiv", d. h. ohne eigene Energieversorgung, ausgestattet sein kann mit einer kabellosen Energieversorgung von einer externen Energieversorgungsquelle.

Des Weiteren betrifft die Erfindung eine Verwendung eines Sets von Produktsensoren als Set von Gefriertrockner-Produktsensoren, mittels dessen während eines Trocknungsprozesses in mehreren, an unterschiedlichen Stellen auf einer Stellfläche und/oder auf unterschiedlichen Stellflächen in dem Gefriertrockner angeordneten Trocknungsgefäßen der Produktparameter des Trocknungsguts gemessen werden kann.

Des Weiteren betrifft die Erfindung ein Trocknungsgefäß, in dem das Trocknungsgut während der Gefriertrocknung bevorratet werden kann.

Schließlich betrifft die Erfindung auch ein Verfahren zum Betrieb eines Produktsensors.

### STAND DER TECHNIK

Während einer Gefriertrocknung in einem Gefriertrockner stellen die Produktparameter, insbesondere die Temperatur des Trocknungsguts in einem Trocknungsgefäß, eine wichtige Prozessgröße dar. Beispielsweise gibt die Temperatur des Trocknungsguts Aufschluss über das Fortschreiten der Sublimation und der Trocknung des Trocknungsguts und die Temperatur des Trocknungsguts kann zur Ermittlung eines Endes der Haupttrocknung und für die Prozesssteuerung herangezogen werden. Allgemeine Informationen zu dem Prozessablauf während einer Gefriertrocknung, zu hier einschlägigen Gefriertrocknern und der Veränderung der Produktparameter des Trocknungsguts während der Gefriertrocknung können der Website www.martinchrist.de entnommen werden.

DE 10 2006 019 641 A1 schlägt die Erfassung der Temperatur eines Trocknungsguts in einem Trocknungsgefäß über einen Gefriertrockner-Produktsensor vor. Der Gefriertrockner-Produktsensor weist eine Hülse aus Metall, Glas oder Keramik auf. Aus einem Ende der Hülse ragt ein in dem Trocknungsgut angeordneter Messfühler heraus, während aus dem anderen Ende der Hülse eine Antenne herausragt. Der Messfühler ist über eine Platine mit der Antenne verbunden. Der Gefriertrockner-Produktsensor weist keine eigene integrierte Energieversorgung auf. Eine Energieversorgung erfolgt vielmehr über einen Schwingkreis der Platine, der berührungslos zu Schwingungen angeregt wird. Die sich ergebende Schwingung des Schwingkreises, insbesondere die Frequenz der Schwingung, hängt dabei von der Temperatur des Messfühlers (und damit von der Temperatur des Trocknungsguts, in dem der Gefriertrockner-Produktsensor angeordnet ist) ab. Der Gefriertrockner-Produktsensor sendet berührungslos ein mit der Schwingung korrelierendes Messsignal aus. Die berührungslose Anregung des Schwingkreises einerseits sowie die berührungslose Übertragung des Messsignals andererseits erfolgt über ein Funksignal von der Antenne des Gefriertrockner-Produktsensors zu einer innerhalb des Gehäuses des Gefriertrockners angeordneten Antenne, die über eine vakuumdichte Durchführung durch das Gehäuse mit einer außerhalb des Gehäuses angeordneten Steuerungseinrichtung verbunden ist. Neben dem Messsignal für die Temperatur überträgt der Gefriertrockner-Produktsensor auch Sensoridentifikations- und Kalibrierdaten. In der Steuerungseinrichtung müssen für den Gefriertrockner-Produktsensor Datensätze zur Verfügung stehen, die neben der aktuellen Temperatur auch den Aufstellungsort innerhalb des Gehäuses sowie das Messobjekt beschreiben. Die Messsignale des Gefriertrockner-Produktsensors können von der Steuerungseinrichtung zyklisch abgefragt und zeitbezogen dokumentiert werden. Mittels eines derartigen Gefriertrockner-Produktsensors soll die Temperatur in einem Trocknungsgefäß, die Temperatur einer Stellplatte, die Temperatur eines Eiskondensators des Gefriertrockners und/oder eine Temperatur in einem Zu- oder Ablauf eines Heiz- oder Kühlmediums des Gefriertrockners erfasst werden. DE 10 2006 019 641 A1 schlägt auch vor, auf entsprechende berührungslose Weise ein Drucksignal zu erfassen. Vorzugsweise kann durch die berührungslose Übertragung der Signale jegliche Verkabelung innerhalb des Gehäuses des Gefriertrockners und/oder von Steckverbindungen entfallen. Möglich ist auch eine abgeschirmte Ausbildung des Gehäuses des Gefriertrockners. Um einen störungsfreien Datenaustausch zwischen den Antennen der Gefriertrockner-Produktsensoren und der mit der Steuerungseinrichtung verbundenen Antenne zu ermöglichen, schlägt DE 10 2006 019 641 A1 vor, die Stellflächen des Gefriertrockners während des Gefriertrocknungsprozesses in einem Abstand voneinander anzuordnen, der nach Maßgabe der Wellenlänge des für die drahtlose Übertragung eingesetzten Frequenzbereichs bemessen ist. Zur Verbesserung der chemischen Beständigkeit und/oder aus hygienischen Gründen können die Gefriertrockner-Produktsensoren in der Hülse aus einem inerten Material (beispielsweise Edelstahl, Glas, Kunststoff oder Keramik) angeordnet sein. Möglich ist auch, dass ein Sensor in entsprechender Weise eine Restfeuchte, einen elektrischen Widerstand oder einen Druck des Trocknungsgutes erfasst und berührungslos überträgt.

DE 20 2009 009 107 U1 beschreibt ein von außen durch eine Wanddurchführung eines Gehäuses eines Gefriertrockners vakuumdicht hindurchgeführtes Bussystem. An das Bussystem sind parallel oder in Reihenschaltung angeordnete Busmodule angeschlossen, die wiederum mit Stellflächen, Sensoren zur Erfassung der Temperaturen von Stellflächen, Sensoren zur Erfassung des elektrischen Widerstands des Trocknungsguts und/oder Sensoren zur Erfassung von Temperaturen des Trocknungsguts sowie Zubehörteilen wie ein Ventil und eine Gebläsebaugruppe verbunden sind. Das Bussystem dient einer Energieversorgung und einer bidirektionalen Übertragung beliebiger Informationen wie Mess- und Steuerdaten. Über das Bussystem können die mit den Busmodulen verbundenen Komponenten individuell adressiert und damit gesteuert werden.

WO 2016/123062 A1 offenbart einen Gefriertrockner-Produktsensor zur Messung einer Temperatur und Feuchtigkeit. In der Druckschrift werden bekannte, auf drahtgebundenen Thermokopplern basierende Gefriertrockner-Produktsensoren dahingehend kritisiert, dass diese aufwändig hinsichtlich der Installation sind, fehleranfällig sein sollen und zu einem Verlust des Trocknungsprodukts, in welchem der Gefriertrockner-Produktsensor angeordnet ist, führen können. Des Weiteren werden bekannte Gefriertrockner-Produktsensoren, deren Messprinzip auf einer drahtlosen, induktions-basierten Anregung einer von der Temperatur des Trocknungsprodukts abhängigen Resonanzfrequenz basieren, dahingehend kritisiert, dass bei einer Verwendung mehrerer derartiger Gefriertrockner-Produktsensoren eine unerwünschte Wechselwirkung der Gefriertrockner-Produktsensoren auftritt. Vorgeschlagen wird vor diesem Hintergrund in der Druckschrift ein Gefriertrockner-Produktsensor, welcher mehrere Messstellen aufweist, an welchen die Temperatur und die Feuchtigkeit gemessen werden kann und welche derart in einem Feld des Gefriertrockner-Produktsensors angeordnet sind, dass die Messstellen in unterschiedlichen Höhen des Trocknungsprodukts in einem Trocknungsgefäß angeordnet werden können. Eine Übertragung der Messsignale des Gefriertrockner-Produktsensors erfolgt über eine drahtlose digitale Kommunikationsverbindung. Der Gefriertrockner-Produktsensor weist eine Tragstruktur auf, welche in einer Öffnung eines Vials angeordnet und hier gehalten werden kann, sowie einen Probenkörper, an welchem die Messstellen in Längsrichtung verteilt angeordnet sind. Der Gefriertrockner-Produktsensor kann des Weiteren eine Steuereinheit aufweisen, die an der Tragstruktur gehalten ist und mit den Messstellen verbunden ist. Die Messstellen können hierbei keramische Kapazitäten aufweisen, wobei die Messstellen eine Erstreckung von 2 mm aufweisen, so dass entlang einer Messlinie über eine Höhe von 12 mm sechs derartige Messstellen angeordnet werden können. Möglich ist auch, dass die Messstellen integrale Bestandteile einer Leiterplatte sind. Kalibrierfaktoren für die Gefriertrockner-Produktsensoren können in der Steuereinheit des Gefriertrockner-Produktsensors abgespeichert sein. Alternativ wird vorgeschlagen, dass Kalibrierfaktoren für einen Gefriertrockner-Produktsensor mit einem zugeordneten Identifikationscode in einer Datenbank abgespeichert sein können, auf welche ein Zugriff von einer außerhalb der Trocknungskammer angeordneten Verarbeitungseinheit möglich ist. Der Gefriertrockner-Produktsensor nutzt einen spezifischen Identifikationscode, um sich selbst gegenüber der Verarbeitungseinheit zu identifizieren. Mit einem Beladen der Trocknungsgefäße auf die Stellflächen der Trocknungskammer werden die Orte, an denen die Gefriertrockner-Produktsensoren in der Trocknungskammer angeordnet werden, ermittelt und tabellarisch abgelegt. Hierbei kann bei einem automatischen Beladesystem eine Verfolgung der Vials mit den darin angeordneten Gefriertrockner-Produktsensoren zu dem jeweiligen Platz auf der Stellfläche der Trocknungskammer erfolgen. Mit dem Empfang der Messsignale von den Gefriertrockner-Produktsensoren wird dann der spezifische Identifikationscode anhand der tabellarischen Ortszuweisung korreliert mit dem Ort des identifizierten Gefriertrockner-Produktsensors in der Trocknungskammer, womit ermöglicht werden soll, dass die zu einem Trocknungsgut empfangenen Messsignale "kartiert" werden können für eine Prozesssteuerung und Prozessanalyse. Für eine Übertragung von Messsignalen können "USB ANT" (eingetragene Marke) -Einsteckmodule verwendet werden, die eine integrierte Antenne sowie eine Software zur Datenaufnahme sowie zur Steuerung der Datenübertragung aufweisen. Der Gefriertrockner-Produktsensor wird drahtlos mit Energie versorgt über einen in der Trocknungskammer angeordneten Sender, welcher ein Hochfrequenz-Anregungssignal aussendet. Auch möglich ist, dass in der Trocknungskammer mehrere Antennen zur Aussendung von Hochfrequenzsignalen angeordnet sind, um direkte und kurze Übertragungswege des Hochfrequenzsignals zu ermöglichen. Eine Auswahl der Orte zur Anordnung der mit den Gefriertrockner-Produktsensoren ausgestatteten Vials kann auf Grundlage von zuvor gemessenen Daten oder anhand der qualitativen Charakteristik der Trocknungskammer erfolgen. Die Messsignale an den Messstellen eines Gefriertrockner-Produktsensors werden gemeinsam mit dem spezifischen Identifikationscode des Gefriertrockner-Produktsensors übertragen. Auf Grundlage der gemessenen Temperatur und Feuchtigkeit kann eine Steuerung eines Flusses eines wärmenden oder kühlenden Fluids in die Stellflächen oder zu einzelnen Teilbereichen der Stellflächen erfolgen. Mit den mehreren in unterschiedlichen Höhen in dem Trocknungsgut angeordneten Messstellen kann während der Gefriertrocknung der Fortschritt der Sublimationsfront in dem Trocknungsgut erfasst werden, welcher dann in der Prozesssteuerung berücksichtigt werden kann.

WO 2016/123177 A1 offenbart den konstruktiven Aufbau eines Gefriertrockner-Produktsensors mit mehreren Messstellen und in diesem Zusammenhang einsetzbare Messprinzipien.

US 2015/034639 A1 offenbart einen Sensor-Anhänger oder ein "Sensor-Tag" ohne Angabe eines spezifischen Einsatzzwecks. Der Sensor-Anhänger verfügt über ein Quarzkristall, dessen Resonanzfrequenz von der zu messenden Temperatur abhängig ist. Ein Resonanzsignal des schwingenden Quarzes wird drahtlos mittels einer Antenne von dem Sensor-Anhänger an die Umgebung übertragen. Der Resonator verfügt über eine äquivalente Induktivität oder Kapazität. Der Sensor-Anhänger kann eine Speichereinheit aufweisen, in der die äquivalente Induktivität oder Kapazität gespeichert ist. Die Speichereinheit kann eine RFIC-Einheit sein. Hierbei kann die RFIC-Einheit auch für eine Steuerung der Übertragung des Sensor-Anhängers zuständig sein. Der Resonator ist mit der Antenne über einen Verbindungsleiter verbunden, dessen Form, Position oder Länge von der äquivalenten Induktivität oder Kapazität des Resonators abhängig ist. Für die Herstellung eines derartigen Sensor-Anhängers werden Antennen mit unterschiedlichen Induktivitäten hergestellt. Für einen hergestellten spezifischen Resonator wird dann die spezifische äquivalente Induktivität oder Kapazität gemessen und dann die Antenne entsprechend der gemessenen spezifischen äquivalenten Induktivität oder Kapazität ausgewählt und mit dem Resonator kombiniert, womit eine Vereinheitlichung der Charakteristik und der Resonanzfrequenzen der unterschiedlichen Sensor-Anhänger erfolgen kann. Der Sensor-Anhänger weist ein flexibles Substrat auf, welches auch der Isolierung dient und aus PET, PEN, PI oder PE hergestellt sein kann. Als Antenne findet ein spiralförmiger Leiter Einsatz, wobei auch eine Dipol-Antenne oder eine Patch-Antenne verwendet werden kann. Die Antenne empfängt ein drahtloses Erregersignal, mit welchem der Resonator in Schwingungen versetzt wird. Die RFIC-Einheit wird ebenfalls drahtlos über die Antenne mit elektrischer Leistung versorgt. Gegebenenfalls kann auch eine Information hinsichtlich der Charakteristik der Resonanzfrequenz des Resonators in der RFIC-Einheit gespeichert sein. Mit Aktivierung der RFIC-Einheit werden die in der RFIC-Einheit gespeicherten Informationen über die Antenne übertragen. Des Weiteren überträgt die Antenne das Resonanzsignal des Resonators. In einer Empfangseinrichtung wird aus der Übertragenen Resonanzfrequenz des Resonators unter Berücksichtigung der spezifischen äquivalenten Kapazität oder Induktivität eine korrigierte Resonanzfrequenz oder gemessene Temperatur ermittelt.

Die nicht gattungsgemäße Druckschrift US 2008/0272131 A1 betrifft einen großvolumigen thermisch isolierten Behälter, in welchem temperaturempfindliche Produkte, wie pharmazeutische Produkte, Nahrungsprodukte, chemische Produkte oder biologische Produkte während der Verarbeitung, Verteilung und der Lagerung, des Transports und des Verschiffens bevorratet und infolge der thermischen Isolation bei einer niedrigen Temperatur gehalten werden. Ein Überwachungsgerät dient einer Überwachung der Temperatur in dem Behälter. Das Überwachungsgerät weist einen RF-Transponder auf, womit eine drahtlose Messung der Temperatur ermöglicht werden soll, ohne dass eine Öffnung des Behälters bereitgestellt werden muss. Der RF-Transponder weist eine RF-Antenne, einen Temperatursensor, eine Batterie und einen elektrischen Schaltkreis auf. Eine Speichereinheit soll das Speichern mindestens einer Messung der Temperatur, beispielsweise einen Temperaturverlauf über der Zeit, ermöglichen. Der Behälter ist bestimmt für die Bevorratung der genannten Produkte bei Temperaturen unterhalb von - 70°C oder sogar unterhalb von - 80°C. Zwecks Aufrechterhaltung der Temperaturen von weniger als - 70°C sind die Produkte in einem Kühlmittel angeordnet, bei dem es sich um Trockeneis handeln kann. In derartigen Temperaturbereichen kann es zum Versagen der Batterie des Überwachungsgeräts kommen, da ein Elektrolyt der Batterie bereits bei einer Temperatur unterhalb von - 30°C gefrieren kann. Die Druckschrift schlägt vor, dass die temperaturempfindliche Batterie in einem Bereich der Wandung des Behälters angeordnet wird, in dem die Batterie infolge des Temparaturanstiegs zwischen der Innenseite der Wandung und der Außenseite der Wandung einer höheren Temperatur ausgesetzt ist, bei welcher das Elektrolyt der Batterie noch nicht gefrieren kann. Zur Dämmung der Wandung kann ein Polymerschaum (insbesondere mit Polyurethan, Polystyren, Polyolefin oder eine Kombination der genannten Materialien) Einsatz finden. Möglich ist auch, dass die Wandung aus Vakuum-isolierten Paneelen ("vacuum isolated panels", kurz "VIPs") besteht. Möglich ist des Weiteren, dass eine Isolation über metallische Folienschichten herbeigeführt wird. Das Überwachungsgerät kann weitere Funktionen erfüllen, wie beispielsweise eine Identifikation, eine Überwachung und/oder ein Tracking. Zusätzlich zu den genannten Komponenten können elektronische Komponenten, wie beispielsweise Prozessoren, Speicherkomponenten, externe Interface-Komponenten (drahtgebunden oder drahtlos), Sensorelemente, Anzeigeelemente, wie beispielsweise ein LCD-Display, Leistungsversorgungen, Transistoren, Dioden, passive Komponenten, wie Widerstände, Kapazitäten und Induktivitäten, Smarttags, Smartcards, RF-Tags, RFID-Tags, drahtlose Tags, Datenlogger u. ä. in das Überwachungsgerät integriert sein. Das Überwachungsgerät kann ergänzend auch eine relative Feuchtigkeit, eine Lichtintensität, eine Spannung, einen Druck oder auch Vibrationen in dem Behälter erfassen. Eine Aktivierung des Überwachungsgeräts kann durch manuelles Betätigen eines Schalters oder auch drahtgebunden oder drahtlos, beispielsweise mittels eines zusätzlichen RFID-Lesegeräts, erfolgen.

Weiterer Stand der Technik ist bekannt aus den Druckschriften WO 2009/030760 A1 und US 2006/239331 A1.

### AUFGABE DER ERFINDUNG

Der Erfindung liegt die Aufgabe zugrunde, eine neue Verwendung eines Produktsensors als Gefriertrockner-Produktsensor vorzuschlagen, der hinsichtlich
- der Baugröße,
- des Bauaufwandes,
- der Kosten,
- des Wirkungsgrades und der Signalgüte,
- der Prozessautomatisierung,
- der Befestigung desselben an einem Stopfen eines Trocknungsgefäßes,
- der Identifikation des Gefriertrockner-Produktsensors und/oder der Identifikation von Kalibrierinformationen wie bspw. Kalibrierkoeffizienten des Gefriertrockner-Produktsensors und/oder
- der Impedanz
   verbessert ist. Des Weiteren liegt der Erfindung die Aufgabe zugrunde,
- eine entsprechend verbesserte Verwendung eines Sets von Produktsensoren,
- ein entsprechend verbessertes, einen Gefriertrockner-Produktsensor aufweisendes Trocknungsgefäß und
- ein entsprechend verbessertes Verfahren zum Betrieb eines Produktsensors vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Ausgestaltungen des Standes der Technik (vgl. bspw. WO 2016/123062 A1) beruhen auf dem Vorurteil der Fachwelt, dass einerseits für den Betrieb des Sensors, insbesondere die kabellose Übertragung des Messsignals des Sensors, und andererseits für den Betrieb der RFID-Einheit unterschiedliche Sende- und/oder Empfangseinheiten und/oder Antenneneinheiten erforderlich sind. Dieses Vorurteil der Fachwelt hat einerseits darauf beruht, dass die Frequenzbereiche einerseits für den Betrieb des Sensors und andererseits für den Betrieb der RFID-Einheiten grundsätzlich unterschiedlich sind, weshalb separate, an die jeweiligen Frequenzbereiche spezifisch angepasste Sende- und/oder Empfangseinheiten oder Antenneneinheiten Einsatz gefunden haben. Andererseits sollte durch die unterschiedlichen Frequenzbereiche für den Betrieb des Sensors und der RFID-Einheit u. U. auch eine Trennung einerseits des Betriebs des Sensors und andererseits eines Betriebs der RFID-Einheit ermöglicht werden.

Erfindungsgemäß wird vorgeschlagen, dass in einem Gefriertrockner-Produktsensor einerseits ein Sensor, der ein Messsignal für einen Produktparameter, nämlich eine Temperatur, erzeugt, und andererseits eine RFID-Einheit eingesetzt wird, wie dies grundsätzlich auch aus dem Stand der Technik bekannt ist.

Erfindungsgemäß dient der Sensor zur Messung einer Temperatur, wobei der Sensor einen Schwingkreis mit einem schwingenden Quarz aufweist, welcher infolge einer Anregung zu Schwingungen angeregt wird, wobei die Resonanzfrequenz der Schwingung entsprechend einer bekannten Abhängigkeit von der Temperatur abhängig ist. Ein mit der Schwingung des Schwingkreises korrelierendes Messsignal des derart ausgebildeten Sensors kann dann über eine Antenne, welche in diesem Fall einen Sender bildet, berührungslos ausgesendet werden. Aus dem derart übertragenen Messsignal kann dann die Resonanzfrequenz ermittelt werden, aus welcher sich dann entsprechend der bekannten Abhängigkeit der Resonanzfrequenz von der Temperatur die Temperatur ermitteln lässt.

Hinsichtlich der grundsätzlichen Ausgestaltung, möglichen Bauformen, Komponenten und der Anregung und Kommunikation von und mit im Rahmen der Erfindung einsetzbaren RFID-Einheiten wird grundsätzlich auf die Website www.wikipedia.de unter dem Suchbegriff RFID und RFID-Einheiten betreffende Standardwerke und Veröffentlichungen, insbesondere Klaus Finkenzeller: "RFID-Handbuch: Grundlagen und praktische Anwendungen von Transpondern, kontaktlosen Chipkarten und NFC", Carl Hanser Verlag GmbH & Co., 7. Auflage, ISBN: 9783446439436
verwiesen. Die RFID-Einheit verfügt hierbei über einen Speicher, in welchem mindestens eine Kenngröße abgespeichert ist, die für den Gefriertrockner-Produktsensor spezifisch ist.

Erfindungsgemäß ist die Kenngröße eine Kalibrier-Kenngröße, welche einen Zusammenhang zwischen dem Messsignal und dem Produktparameter, nämlich der Temperatur, beschreibt. Für die erfindungsgemäße Ausbildung des Sensors mit einem Schwingkreis mit einem schwingenden Quarz kann eine derartige Kalibrier-Kenngröße die Abhängigkeit der Resonanzfrequenz des mit dem Quarz gebildeten Schwingkreisen von der Temperatur beschreiben.

Um lediglich einige, die Erfindung nicht beschränkende Beispiele zu nennen, kann es sich bei einer weiteren Kenngröße um eine den jeweiligen Gefriertrockner-Produktsensor spezifizierende Identifikations-Kenngröße (im einfachsten Fall eine laufende spezifische Nummer 1, 2, ... für die unterschiedlichen Gefriertrockner-Produktsensoren) handeln

Die Erfindung schlägt erstmalig vor, dass der Gefriertrockner-Produktsensor eine Antenneneinheit aufweist, die multifunktional genutzt wird:
a) Einerseits erfolgt mittels der Antenneneinheit eine kabellose Energieversorgung des Sensors, eine kabellose Anregung des Sensors (was für die erfindungsgemäße Ausbildung des Sensors mit einem Schwingkreis mit einem Quarz eine Anregung des Schwingkreises zu Schwingungen ist) und/oder eine kabellose Übertragung des Messsignals, was für die erfindungsgemäße Ausbildung des Sensors mit einem Schwingkreis mit einem Quarz bedeuten kann, dass die Schwingung des Schwingkreises mit der Resonanzfrequenz übertragen wird.
b) Andererseits wird dieselbe Antenneneinheit genutzt, um kabellos eine Übertragung der für den Gefriertrockner-Produktsensor spezifischen Kenngröße, die in der RFID-Einheit gespeichert ist, zu ermöglichen, wobei zusätzlich möglich ist, dass über die Antenneneinheit die RFID-Einheit kabellos mit Energie versorgt wird und/oder die RFID-Einheit kabellos angeregt wird.

Im Rahmen der Erfindung kann somit der Einsatz einer zusätzlichen zweiten Antenneneinheit für die vorgenannten Funktionen entbehrlich gemacht werden (wobei u. U. aber für andere Zwecke auch eine zweite Antenneneinheit vorhanden sein kann, ohne dass hierdurch der Rahmen der Erfindung verlassen wird).

Die der Erfindung zugrunde liegende Überwindung des zuvor erläuterten Vorurteils der Fachwelt ist auf Grundlage der Erkenntnis erfolgt, dass trotz der unterschiedlichen Frequenzbereiche einerseits für den Betrieb des Sensors und andererseits für den Betrieb der RFID-Einheit eine gemeinsame Antenneneinheit genutzt werden kann, auch wenn unter Umständen die gemeinsam genutzte Antenneneinheit dann nicht optimal für den jeweiligen Frequenzbereich des Sensors bzw. der RFID-Einheit ausgelegt werden kann. Hierbei kann die erfindungsgemäße multifunktionale Nutzung einer einzigen Antenneneinheit trotz der unterschiedlichen Frequenzbereiche auch mit einem hohen Wirkungsgrad erfolgen, wenn es sich bei den Frequenzen einerseits für den Betrieb des Sensors und andererseits für den Betrieb der RFID-Einheit um sub- oder superharmonische Frequenzen handelt. Auch wenn dies nicht der Fall ist, nimmt die Erfindung gezielt zur Reduktion des Bauaufwandes auch eine nicht optimierte Dimensionierung der Antenneneinheit für den Betrieb des Sensors und/oder der RFID-Einheit in Kauf. So kann auch eine Auslegung der Antenneneinheit derart erfolgen, dass eine Art Mittelweg für einen nicht optimalen, aber ausreichenden Betrieb sowohl des Sensors als auch der RFID-Einheit gewählt werden.

Für eine erfindungsgemäße Ausgestaltung ist aber die Antenneneinheit entsprechend der kabellosen Energieversorgung des Sensors, der kabellosen Anregung des Sensors und/oder der kabellosen Übertragung des Messsignals des Sensors dimensioniert oder optimiert, während die Antenneneinheit unter Umständen weniger optimal ausgelegt ist für eine kabellose Energieversorgung der RFID-Einheit, eine kabellose Anregung der RFID-Einheit und/oder eine kabellose Übertragung der für den Gefriertrockner-Produktsensor spezifischen Kenngröße. Dieser Ausgestaltung liegt insbesondere die Erkenntnis zugrunde, dass eine optimierte Auslegung der Antenneneinheit für den Betrieb des Sensors erforderlich ist, da in dem Gefriertrockner unter Umständen der Sensor beabstandet von einer Empfangseinrichtung für das kabellos übertragene Messsignal angeordnet ist und/oder eine kabellose Übertragung des Messsignals des Sensors über einen verwinkelten Weg beispielsweise zwischen Stellflächen und/oder Rändern der Stellflächen und dem Gehäuse des Gefriertrockners erfolgen muss. Möglich ist auch, für den Betrieb des Sensors während des Gefriertrocknungsprozesses eine Einbringung von Energie in Form der Anregung des Sensors minimiert werden soll, um den Gefriertrocknungsprozess nicht zu stören, so dass eine hinsichtlich der Anregung des Sensors optimierte Auslegung der Antenneneinheit vorteilhaft sein kann. Hingegen kann die RFID-Einheit des Gefriertrockner-Produktsensors bei der Zuführung desselben zu dem Gefriertrockner unter Umständen verhältnismäßig nah an einer kabellosen Energieversorgungseinrichtung, einer kabellosen Anregungseinrichtung und/oder einer kabellosen Übertragungseinrichtung für die für den Gefriertrockner-Produktsensor spezifische Kenngröße vorbeigeführt werden. Somit ist die Energieversorgung, die Anregung oder die Übertragung auch bei suboptimaler Auslegung der Antenneneinheit möglich. Unter Umständen kann auch außerhalb des Gefriertrockners bei der Vorbeiführung der RFID-Einheit mit verhältnismäßig großen Anregungsenergien und/oder Übertragungsenergien gearbeitet werden, was auch eine für die Wechselwirkung mit der RFID-Einheit optimale Auslegung der Antenneneinheit entbehrlich machen kann.

Für die Art der Verbindung der Antenneneinheit mit dem Sensor sowie der RFID-Einheit gibt es im Rahmen der Erfindung vielfältige Möglichkeiten. Möglich ist beispielsweise, dass zwischen der Antenneneinheit und einerseits dem Sensor und andererseits der RFID-Einheit eine Schalteinrichtung angeordnet ist. Für den Fall, dass die spezifische Kenngröße aus der RFID-Einheit ausgelesen werden soll, verbindet dann die Schalteinheit die Antenneneinheit mit der RFID-Einheit, während dann über die Schalteinheit keine Verbindung zwischen der Antenneneinheit und dem Sensor bereitgestellt wird. Dieser Schaltzustand der Schalteinheit wird insbesondere eingenommen, wenn eine Zuführung eines Trocknungsgefäßes mit darin angeordnetem Gefriertrockner-Produktsensor zu dem Gefriertrockner erfolgt, um dann den Gefriertrockner-Produktsensor zu identifizieren und unter Umständen eine Kalibrier-Kenngröße auszulesen. Möglich ist auch, dass dieser Schaltzustand der Schalteinheit eingenommen wird, um (bspw. werksseitig oder außerhalb des Gefriertrockners) Daten an die RFID-Einheit (bspw. eine Identifikation des Gefriertrockner-Produktsensors und/oder eine Kalibrier-Kenngröße) zu übertragen. Soll hingegen der Sensor zur Erzeugung eines Messsignals für den Produktparameter, nämlich die Temperatur, betrieben werden, erfolgt eine Umschaltung der Schalteinheit derart, dass die Antenneneinheit mit dem Sensor verbunden wird, während die Verbindung zwischen der Antenneneinheit und der RFID-Einheit unterbrochen wird.

Möglich ist aber auch, dass die Antenneneinheit in beliebiger Schaltung permanent sowohl mit dem Sensor als auch mit der RFID-Einheit verbunden ist. Für einen besonderen Vorschlag der Erfindung ist die Antenneneinheit über einen ersten Leitungszweig permanent mit dem Sensor verbunden. Des Weiteren ist die Antenneneinheit über einen zweiten Leitungszweig permanent mit der RFID-Einheit verbunden. In diesem Fall kann in dem ersten Leitungszweig ein erster Filter angeordnet sein. Der erste Filter bereitet das Signal der Antenneneinheit für die kabellose Energieversorgung des Sensors, die kabellose Anregung des Sensors und/oder die kabellose Übertragung des Messsignals des Sensors auf. In dem zweiten Leitungszweig ist ein zweiter Filter angeordnet. Der zweite Filter bereitet das Signal der Antenneneinheit für die kabellose Energieversorgung der RFID-Einheit, die kabellose Anregung der RFID-Einheit und/oder die kabellose Übertragung der für den Gefriertrockner-Produktsensor spezifischen Kenngröße auf. Hierbei erfolgt die Gestaltung und Auslegung des ersten Filters und des zweiten Filters derart, dass bei einer Anregung der Antenneneinheit, welche für den Sensor bestimmt ist, der erste Filter durchgängig ist, während der zweite Filter sperrt. Entsprechend ist für eine Anregung der Antenneneinheit, welche für die RFID-Einheit bestimmt ist, der zweite Filter durchgängig, während der erste Filter sperrt. Hierbei umfasst ein "Sperren" nicht nur ein vollständiges Sperren, sondern auch eine gegenüber der "Durchgängigkeit" deutlich, beispielsweise um mindestens eine Größenordnung oder mindestens einen Faktor 5 oder 10, reduzierte Durchgängigkeit. Die beiden Filter können im Rahmen der Erfindung als Hochpassfilter, Bandpassfilter oder Tiefpassfilter ausgebildet sein. Möglich ist auch, dass die beiden Filter von einer Frequenzweiche oder einem sogenannten Diplexer ausgebildet werden.

Im Folgenden wird zur Vereinfachung der Beschreibung auf einen gemeinsamen Einsatz von zwei Gefriertrockner-Produktsensoren in einer Trocknungskammer eines Gefriertrockners während eines Gefriertrocknungsprozesses Bezug genommen, wobei das Entsprechende für eine größere Anzahl von in einem Gefriertrocknungsprozess eingesetzten Gefriertrockner-Produktsensoren gilt:
Werden während einer Gefriertrocknung in einem Gefriertrockner zwei Gefriertrockner-Produktsensoren in unterschiedlichen Trocknungsgefäßen eingesetzt, arbeiten die Sensoren unter Umständen in unterschiedlichen Frequenzbändern, die ohne Überlappung miteinander zueinander versetzt sind. Ohne das eine Einschränkung der Erfindung auf dieses Beispiel erfolgen soll, kann beispielsweise die Resonanzfrequenz eines Schwingkreises des ersten Sensors in dem hier einschlägigen Produktparameterbereich (insbesondere in einem Temperaturbereich von - 60°C bis + 140°C) in einem ersten Frequenzband von 170 KHz bis 175 KHz liegen, während die entsprechende Resonanzfrequenz des zweiten Sensors in einem zweiten Frequenzband von 175 KHz bis 180 KHz (ohne Überlappung mit dem ersten Frequenzband) liegt. Diese unterschiedlichen Abstimmungen der Resonanzfrequenzen basieren auf unterschiedlichen Abstimmungen der jeweiligen Schwingkreise, was durch unterschiedliche zum Einsatz kommende Quarze und/oder durch unterschiedliche, zusätzlich zu dem Quarz in den Schwingkreisen angeordnete elektrische Bauelemente (wie Kapazitäten, Induktivitäten und/oder Widerstände) erfolgen kann. Möglich ist, dass in einem derartigen Fall die ersten Filter der beiden Sensoren unterschiedlich ausgelegt sind, nämlich für die vorgenannten unterschiedlichen Frequenzbänder, so dass diese lediglich Frequenzen in dem jeweiligen Frequenzband durchlassen. Dies erfordert aber, dass in den Gefriertrockner-Produktsensoren jeweils spezifisch an das jeweilige Frequenzband angepasste erste Filter eingesetzt werden müssen, was den Herstellungsaufwand und die Bauteilvielfalt vergrößert. Für eine besondere Ausgestaltung des erfindungsgemäßen Gefriertrockner-Produktsensors ist der erste Filter in dem ersten Leitungszweig dieses Gefriertrockner-Produktsensors so dimensioniert, dass der erste Filter das Signal der Antenneneinheit für die kabellose Energieversorgung des Sensors, die kabellose Anregung des Sensors und/oder die kabellose Übertragung des Messsignals des Sensors aufbereitet und auch das Signal der Antenneneinheit für die kabellose Energieversorgung eines anderen Sensors, die kabellose Anregung eines anderen Sensors und/oder die kabellose Übertragung des Messsignals eines anderen Sensors aufbereiten könnte, wobei die beiden genannten Sensoren in unterschiedlichen Frequenzbändern arbeiten. Für das vorgenannte Beispiel bedeutet dies, dass in dem Gefriertrockner-Produktsensor sowohl des Sensors als auch des anderen Sensors derselbe erste Filter Einsatz finden kann, welcher dann für die beiden unterschiedlichen Frequenzbänder durchgängig ist, also für Frequenz im Bereich von 170 KHz bis 180 KHz durchgängig ist. Bei entsprechend größerer Anzahl von gleichzeitig eingesetzten Gefriertrockner-Produktsensoren ist die Bandbreite des ersten Filters, für welche der erste Filter durchgängig ist, entsprechend größer zu wählen, so dass der erste Filter für sämtliche einschlägigen unterschiedlichen Frequenzbänder durchgängig ist.

Die in der RFID-Einheit gespeicherte spezifische Kenngröße ist eine Kalibrierkurve ist, welche eine Abhängigkeit einer temperaturabhängigen Resonanzfrequenz von der Temperatur abbildet. Möglich ist des Weiteren, dass die spezifische Kenngröße eine Kalibrierfunktion mit einer mathematischen Beschreibung einer Abhängigkeit ist. Beispielsweise kann die Kalibrierfunktion in einem Polynom oder den relevanten Koeffizienten eines Polynoms zur Beschreibung der Abhängigkeit bestehen. Möglich ist auch, dass die spezifische Kenngröße ein Kalibrier-Kennfeld ist, womit auch die Berücksichtigung von einer Abhängigkeit von weiteren Einflussgrößen gegeben ist.

Möglich ist im Rahmen der vorliegenden Erfindung durchaus, dass der Gefriertrockner-Produktsensor über eine beliebige Trag- und Halteeinrichtung an dem Trocknungsgefäß oder dem Stopfen desselben gehalten ist. Für einen besonderen Vorschlag der Erfindung erfüllt die Antenneneinheit eine weitere Funktion, indem diese unmittelbar eine Trag- und Halteeinrichtung für eine Befestigung des Gefriertrockner-Produktsensors an einem Stopfen eines Trocknungsgefäßes ausbildet oder eine Trag- und Halteeinrichtung an der Antenneneinheit befestigt ist. Hierdurch kann der Bauaufwand für den Gefriertrockner-Produktsensor unter Umständen weiter reduziert werden.

Die Erfindung schlägt für eine weitere Ausgestaltung vor, dass die RFID-Einheit auf die Fußpunktimpedanz der Antenneneinheit angepasst ist.

Durchaus möglich ist, dass bei dem Gefriertrockner-Produktsensor lediglich ein Sensor vorhanden ist, welcher in einer vorgegebenen Höhe oder in einem vorgegebenen Höhenbereich den Produktparameter in dem Trocknungsgut in dem Trocknungsgefäß erfassen kann. Die Erfindung schlägt aber auch vor, dass in einem Gefriertrockner-Produktsensor mehrere Sensoren vorhanden sind, die in unterschiedlichen Höhen des Gefriertrockner-Produktsensors angeordnet sind. Hierbei bezieht sich die Höhe auf den Abstand der Sensoren von dem Boden des Trocknungsgefäßes, wenn der Gefriertrockner-Produktsensor bestimmungsgemäß in dem Trocknungsgefäß angeordnet und, beispielsweise im Bereich der Stopfen des Trocknungsgefäßes, gehalten ist. Im Rahmen der Erfindung können für die mehreren Sensoren unterschiedliche oder sogar dieselbe Antenneneinheit eingesetzt sein. Vorzugsweise arbeiten die mehreren Sensoren der Gefriertrockner-Produktsensors dann in unterschiedlichen, nicht überlappenden Frequenzbändern.

Für die Ausgestaltung der Antenneneinheit gibt es vielfältige Möglichkeiten. Für einen Vorschlag der Erfindung weist die elektrisch wirksame und für das kabellose Senden, Anregen und Empfangen dienende Antenneneinheit eine langgestreckte Antenne und eine Hülse auf, wobei die Antenne in dem der Hülse abgewandten Endbereich eine beispielsweise halbkugelförmige Verdickung aufweisen kann. Hierbei kann im Inneren der Hülse eine passive Elektronik, insbesondere eine Platine, des Gefriertrockner-Produktsensors angeordnet sein. Eine Auslegung der Antenneneinheit erfolgt dann durch die elektrische Dimensionierung der Antenne und der Hülse.

Erfindungsgemäß weist der Sensor einen Schwingkreis mit einem schwingenden Quarz auf. Die Resonanzfrequenz des Schwingkreises ist dabei von der Temperatur abhängig, die in diesem Fall den zu messenden Produktparameter bildet. Die Resonanzfrequenz liegt (insbesondere in dem hier einschlägigen Temperaturmessbereich, bspw. von - 40 °C bis 100 °C oder - 60 °C bis 140 °C) bspw. in einem Frequenzband, welches für eine Ausgestaltung in einem Bereich von 32 KHz bis 67 KHz liegt oder für ein anderes Beispiel im Bereich von 170 KHz bis 250 KHz liegt (wobei dann die einzelnen, nicht überlappenden Frequenzbänder für unterschiedliche simultan eingesetzte Sensoren innerhalb der genannten Bereiche liegen).

Für die gewählten Anregungsfrequenzen der RFID-Einheit und/oder des Sensors gibt es im Rahmen der Erfindung vielfältige Möglichkeiten. Für einen Vorschlag der Erfindung liegt die Anregungsfrequenz der RFID-Einheit in einem sogenannten "SRD-Band Europa" oder einem so genannten "ISM-Band Region 2", wobei dann die Anregungsfrequenz insbesondere
- 868 MHz (vorzugsweise ± 50MHz, ± 30MHz, ± 10 MHz oder ± 5 MHz), was beispielsweise für die EU bestimmte Gefriertrockner-Produktsensoren gelten kann, oder
- 915 MHz (vorzugsweise ± 50MHz, ± 30MHz, ± 10MHz oder ± 5 MHz), was beispielsweise für den US-Markt bestimmte Gefriertrockner-Produktsensoren gelten kann,
   betragen kann.

Möglich ist, dass eine Anregung des Sensors lediglich im Bereich des Frequenzbandes dieses Sensors, also im Umgebungsbereich der Resonanzfrequenz des Schwingkreises des Sensors, erfolgt. Möglich ist aber auch, dass eine Anregung des Sensors über ein Sensor-Anregungssignal erfolgt, in welchem einer Sensor-Anregungsfrequenz eine Trägerfrequenz (bspw. in einem sogenannten ISM Band, Typ B mit einer Trägerfrequenz im Bereich von 2,4 GHz bis 2,5 GHz) überlagert ist.

Für eine erfindungsgemäße Ausgestaltung des Gefriertrockner-Produktsensors weist der zweite Filter, der in dem zweiten Leitungszweig angeordnet ist, eine Filtercharakteristik derart auf, dass ein RFID-Antenneneingangssignal durch den zweiten Filter aufbereitet und insbesondere durchgelassen wird sowohl dann, wenn das RFID-Antenneneingangssignal eine Anregungsfrequenz von 868 MHz ± 20 MHz aufweist als auch dann, wenn das RFID-Antenneneingangssignal eine Anregungsfrequenz von 915 MHz ± 20 MHz aufweist. Für diese erfindungsgemäße Ausgestaltung kann ohne erforderliche bauliche Modifikationen (zumindest hinsichtlich des zweiten Filters) der Gefriertrockner-Produktsensor sowohl für den europäischen Markt als auch für den amerikanischen Markt genutzt werden.

Die Erfindung schlägt des Weiteren vor, dass in dem ersten Leitungszweig und/oder dem zweiten Leitungszweig ein Modulator und/oder ein Demodulator angeordnet sind/ist. Dies wird im Folgenden beispielhaft für den ersten Leitungszweig erläutert:
Empfängt zur Anregung des Sensors die Antenneneinheit ein Sensor-Antenneneingangssignal, welches ein moduliertes Signal aus einem Trägersignal, insbesondere mit einer Trägerfrequenz im Bereich von 2,4 bis 2,5 GHz, und einem Sensoranregungssignal ist, kann dieses Sensor-Antenneneingangssignal für eine gute Übertragung von einer Sensor-Sende- und/oder - Empfangseinheit zu der Antenneneinheit optimiert sein. Des Weiteren kann das modulierte Signal über eine Frequenzweiche oder die beiden Filter gezielt dem ersten Leitungszweig zugeführt werden. Mittels eines Demodulators wird aus dem Sensor-Antenneneingangssignal das Sensor-Anregungssignal extrahiert oder erzeugt, mit dem dann eine Anregung des Schwingkreises des Sensors erfolgen kann. Im umgekehrten Fall, dass ein Messsignal des Sensors, also ein Schwingungssignal des Schwingkreises, über die Antenneneinheit an eine oder die Sensor-Sende- und/oder -Empfangseinheit übertragen werden soll, kann das Sensor-Antwortsignal oder ein Sensor-Ausschwingsignal des Sensors über einen Modulator mit einem Trägersignal überlagert werden, welches dann (nach dem Passieren des ersten Filters) die Antenneneinheit beaufschlagt und von der Antenneneinheit als Sensor-Antennenausgangssignal an die Sensor-Sende -und/oder -Empfangseinheit übertragen werden kann. Grundsätzlich können die Trägerfrequenzen für die beiden unterschiedlichen Wege unterschiedlich sein. Vorzugsweise finden hierbei dieselben Trägerfrequenzen Einsatz.

Für die Gestaltung des Modulators und/oder Demodulators gibt es vielfältige, dem Fachmann an sich bekannte Möglichkeiten. So kann bspw. ein Hüllkurven-Modulator und -Demodulator Einsatz finden, wobei in einem Demodulator mittels einer Diode eine Gleichrichtung oder Abtrennung eines positiven oder negativen Signalbereichs erfolgen kann. Bei Nachschaltung eines geeignet dimensionierten Tiefpasses zu der Diode, insbesondere eines Kondensators, lädt die Diode mit der Signalhalbwelle mit dem richtigen Vorzeichen den Kondensator auf, während die Diode für die Signalhalbwelle mit dem anderen Vorzeichen sperrt und der Kondensator bspw. über einen parallelen Widerstand langsam oder in unerheblichen Umfang entladen werden kann. Bei optimaler Dimensionierung der Diode und des nachgeordneten Tiefpasses erzeugt ein derart gestalteter Demodulator eine kontinuierliche (obere oder untere) Hüllkurve aus dem modulierten Signal, welche dann das Sensor-Anregungssignal bilden kann. Hinsichtlich alternativer oder verbesserter Ausgestaltungen eines Modulators und/oder eines Demodulators wird auf die an sich bekannten Ausführungsformen des Stands der Technik verwiesen.

Eine weitere Lösung der der Erfindung zugrunde liegenden Aufgabe stellt ein Set mit mehreren Gefriertrockner-Produktsensoren der zuvor erläuterten Art dar. Hierbei verfügt das Set über einen ersten Gefriertrockner-Produktsensor mit einem ersten Sensor, der in einem ersten Frequenzband arbeitet. Des Weiteren weist das Set einen zweiten Gefriertrockner-Produktsensor auf mit einem zweiten Sensor. Der zweite Sensor arbeitet in einem zweiten Frequenzband, welches ohne Überlappung von dem ersten Frequenzband abweicht (vgl. das obige Beispiel). In den ersten Leitungszweigen des ersten Sensors und des zweiten Sensors sind baugleiche und gleich dimensionierte (erste) Filter angeordnet, die das Signal der Antenneneinheit für die kabellose Energieversorgung sowohl des ersten Sensors als auch des zweiten Sensors, die kabellose Anregung sowohl des ersten Sensors als auch des zweiten Sensors und/oder die kabellose Übertragung des Messsignals sowohl des ersten Sensors als auch des zweiten Sensors aufbereiten oder diesbezüglich durchgängig sind. Diese erfindungsgemäße Ausgestaltung ermöglicht eine Fertigung mehrerer simultan einsetzbarer Gefriertrockner-Produktsensoren mit einem vergrößerten Gleichanteil, da in den unterschiedlichen Gefriertrockner-Produktsensoren des Sets gleiche (erste) Filter eingesetzt werden können, ohne dass spezifische Anpassungen der Filter erforderlich sind.

Grundsätzlich kann der Gefriertrockner-Produktsensor in beliebiger Weise mit dem Trocknungsgut in Wechselwirkung gebracht werden, was vorzugsweise in einem Trocknungsbehälter beliebiger Geometrie und Gestaltung erfolgt. Die der Erfindung zugrunde liegende Aufgabe wird auch gelöst durch ein mit einem Gefriertrockner-Produktsensor ausgestattetes Trocknungsgefäß für die Trocknung eines Trocknungsguts in einem Gefriertrockner. Ein derartiges Trocknungsgefäß verfügt über einen Trocknungsbehälter und einen Stopfen. In einer ersten Betriebsstellung, welche vorzugsweise während der Gefriertrocknung oder Haupttrocknung eingenommen wird, verschließt der Stopfen fluidoffen eine Öffnung des Trocknungsbehälters. Ist hingegen die Gefriertrocknung abgeschlossen, wird der Stopfen so in den Trocknungsbehälter gepresst, dass dieser eine zweite Betriebsstellung einnimmt, in welcher der Stopfen die Öffnung des Trocknungsbehälters fluiddicht verschließt. In einem derartigen Trocknungsgefäß findet ein Gefriertrockner-Produktsensor der zuvor erläuterten Art Einsatz. Hierbei kann vorzugsweise die Befestigung des Gefriertrockner-Produktsensors mittels der Antenne an dem Stopfen erfolgen. Beispielsweise kann die Antenne durch eine Bohrung oder eine randseitige Nut des Stopfens aus dem Inneren des Trocknungsbehälters herausgeführt werden und dann außerhalb des Trocknungsbehälters und des Stopfens so abgewinkelt oder umgebogen werden, dass der Gefriertrockner-Produktsensor in einer vorbestimmten Höhe in dem Trocknungsbehälter gehalten wird.

Eine weitere Lösung der der Erfindung zugrunde liegenden Aufgabe stellt ein Verfahren zum Betrieb eines Gefriertrockner-Produktsensors der zuvor beschriebenen Art dar. In einem derartigen Verfahren erfolgt in einem ersten Verfahrensschritt eine Anregung eines zweiten Leitungszweigs, in dem die RFID-Einheit angeordnet ist, über die Antenneneinheit, welche ein RFID-Antenneneingangssignal (vorzugsweise mit einer Anregungsfrequenz im Bereich von 868 MHz oder 915 MHz) von einer RFID-Sende- und/oder -Empfangseinheit empfängt. Diese Anregung erfolgt vorzugsweise außerhalb des Gefriertrockners, wobei durch die automatische Prozesssteuerung der Gefriertrockner-Produktsensor mit kleinem Abstand von der RFID-Sende- und/oder -Empfangseinheit vorbeigeführt werden kann und das RFID-Antenneneingangssignal von der RFID-Sende- und/oder -Empfangseinheit auch mit einer großen Intensität ausgestrahlt werden kann. Infolge dieser Anregung ist dann eine kabellose Übertragung mindestens einer für den Gefriertrockner-Produktsensor spezifischen Kenngröße, nämlich einer Kalibrierkurve, von der RFID-Einheit in dem zweiten Leitungszweig mittels eines RFID-Antennenausgangssignals über die Antenneneinheit an die zuvor genutzte RFID-Sende- und/oder -Empfangseinheit oder eine andere RFID-Sende- und/oder-Empfangseinheit möglich.

In einem zweiten Verfahrensschritt, welcher vorzugsweise innerhalb des Gefriertrockners durchgeführt wird, erfolgt dann die Messung des Produktparameters, wobei hierzu oder für eine Auswertung eine Nutzung der zuvor übertragenen spezifischen Kenngröße erfolgt. Zunächst erfolgt eine Anregung eines ersten Leitungszweigs durch eine Sensor-Sende- und/oder - Empfangseinheit, in dem diese ein Sensor-Antenneneingangssignal erzeugt, welches über die Antenneneinheit des Gefriertrockner-Produktsensors empfangen werden kann. In dem Sensor-Antenneneingangssignal sind ein Trägersignal (insbesondere mit einer Trägerfrequenz im Bereich von 2,4 bis 2,5 GHz) und ein Sensor-Anregungssignal überlagert. Das derart von der Antenneneinheit empfangene Sensor-Antenneneingangssignal wird dann mittels eines Demodulators demoduliert. Ergebnis der Demodulation ist ein Sensor-Anregungssignal, welches eine Sensor-Anregungsfrequenz aufweist. Mit dem Sensor-Anregungssignal wird dann der Schwingkreis des Sensors zu Schwingungen angeregt, woraus sich erzwungene Schwingungen ergeben. Vorzugsweise erfolgt eine derartige Anregung über mehr als 100, 200, 500, 1.000, 2.000, 5.000, 10.000 oder sogar mehr als 50.000 Anregungsperioden, womit sich eine erzwungene Schwingung des Schwingkreises ergibt. Vorzugsweise wird die Zahl der Anregungsperioden so groß gewählt, dass ein transientes Einschwingverhalten infolge der Anregung abgeklungen ist.

Hieran anschließend erfolgt dann die Deaktivierung der Anregung des ersten Leitungszweigs, womit auch eine Deaktivierung der Anregung des Sensors mit dem Sensor-Anregungssignal erfolgt. Infolge der Deaktivierung ergibt sich ein transientes Ausschwingverhalten des Schwingkreises des Sensors.

In dem erfindungsgemäßen Verfahren wird dann ein Sensor-Ausschwingsignal des Sensors auf Grundlage des transienten Ausschwingverhalten des Sensors erzeugt. Dieses Sensor-Ausschwingsignal wird dann mittels eines Modulators moduliert mit einem Trägersignal, woraus sich dann ein Sensor-Antennenausgangssignal ergibt. Mit diesem Sensor-Antennenausgangssignal wird dann die Antenneneinheit beaufschlagt. Die Antenneneinheit überträgt dann kabellos das Sensor-Antennenausgangssignal von der Antenneneinheit an die zuvor genutzte Sensor-Sende- und/oder -Empfangseinheit oder eine andere Sensor-Sende- und/oder -Empfangseinheit.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Sensor die Rede ist, ist dies so zu verstehen, dass genau ein Sensor, zwei Sensoren oder mehr Sensoren vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Gefriertrockner-Produktsensor.
- **Fig. 2 und 3**: zeigen unterschiedliche Prinzipskizzen eines elektrischen Aufbaus für unterschiedliche Ausführungsformen eines Gefriertrockner-Produktsensors.
- **Fig. 4**: zeigt Frequenzgänge von Filtern, die einem Sensor und einer RFID-Einheit in einem Gefriertrockner-Produktsensor vorgeordnet sind.
- **Fig. 5**: zeigt eine Kalibrierkurve für die Abhängigkeit einer Resonanzfrequenz eines Sensors in Abhängigkeit von der Temperatur.
- **Fig. 6**: zeigt die Wechselwirkung einer Prozesssteuerung mit einem Gefriertrockner-Produktsensor, hier für die Wechselwirkung zwischen der Prozesssteuerung mit der RFID-Einheit des Gefriertrockner-Produktsensors außerhalb des Gefriertrockners.
- **Fig. 7**: zeigt die Wechselwirkung einer Prozesssteuerung mit einem Gefriertrockner-Produktsensor, hier mit der Wechselwirkung der Prozesssteuerung mit dem Sensor des Gefriertrockner-Produktsensors innerhalb des Gefriertrockners.
- **Fig. 8**: zeigt schematisch ein Verfahren zum Betriebs eines Gefriertrockner-Produktsensors.

### FIGURENBESCHREIBUNG

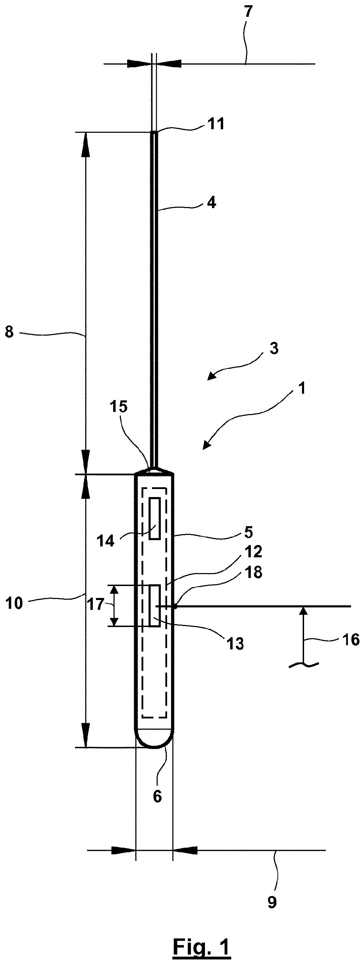

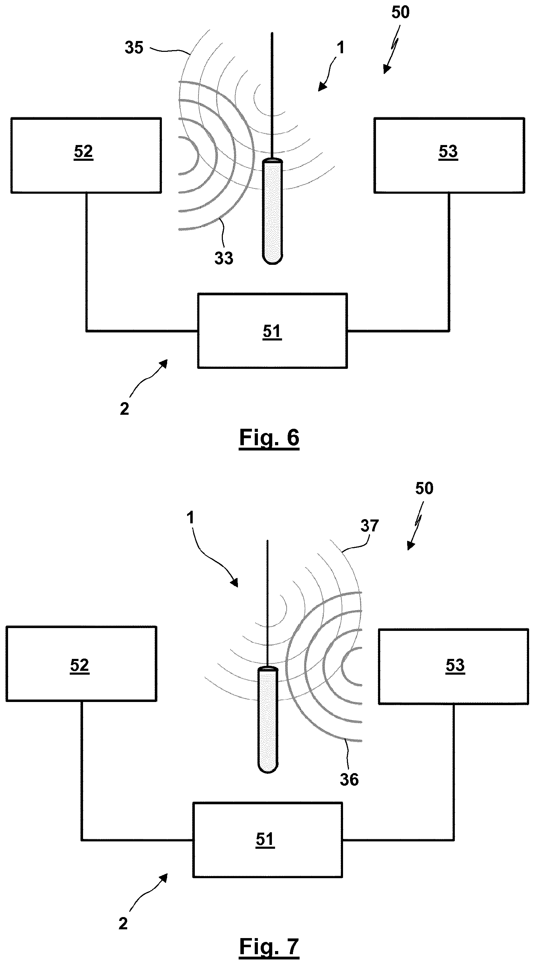

**Fig. 1** zeigt einen Gefriertrockner-Produktsensor 1. Der Gefriertrockner-Produktsensor 1 kommuniziert kabellos mit einer Prozesssteuerung 2 eines Gefriertrockners (s. Fig. 6 und 7), wobei der Gefriertrockner-Produktsensor 1 kabellos mit Energie versorgt werden kann, so dass dieser als "passiver" Gefriertrockner-Produktsensor 1 ausgebildet ist.

Der Gefriertrockner-Produktsensor 1 verfügt über eine Antenneneinheit 3 mit einer Antenne 4 und einer Hülse 5. Die Antenneneinheit 3 kann hierbei als resonante Schmalbandantenne oder nicht resonante Breitbandantenne ausgebildet sein. Die Antennenparameter der Antenneneinheit 3 (bspw. ein Fußpunktwiderstand, ein Strahlungswiderstand, ein Wirkungsgrad, eine Absorptionsfläche, ein Antennenfaktor, eine effektive Antennenlänge) hängen hierbei sowohl von der Antenne 4 als auch der Hülse 5 ab. Die Antenne 4 und die Hülse 5 sind somit unmittelbar elektrisch miteinander gekoppelt. Die Antenne 4 ist stabförmig, insbesondere mit einem runden Querschnitt, ausgebildet. Die Hülse 5 ist hohlzylinderförmig ausgebildet und verfügt auf der der Antenne 4 abgewandten Seite über einen beliebig geformten, insbesondere halbkugelflächenförmigen Boden 6, während diese auf der gegenüberliegenden Seite grundsätzlich offen ist.

Für eine beispielhafte Dimensionierung verfügen die genannten Bauelemente der Antenneneinheit 3 über folgende Abmessungen:
Die Antenne 4 hat einen Durchmesser 7 von 0,35 mm, während deren Länge 8 25 mm beträgt. Die Hülse 5 hat einen Durchmesser 9 von 2,7 mm, während diese eine Länge 10 von 20 mm hat. Möglich ist aber auch für dieses Beispiel, dass die Durchmesser 7, 9 und Längen 8, 10 um ± 20 %, ± 15 %, ± 10 % oder ± 5 % von den vorgenannten Abmessungen abweichen.

Im Folgenden werden optionale Gestaltungsmöglichkeiten für die Antenneneinheit 3 angeführt: Möglich ist bspw., dass die Spitze 11 der Antenne 4 halbkugelförmig ausgebildet ist, einen Ring aufweist oder eine von einer Anschmelzung der Spitze 11 ausgebildete Verdickung aufweist. Für die Antenne 4 kann ein Material und eine Dimensionierung derart gewählt werden, dass ein Umbiegen derselben über eine Kante mit einem Radius von 2 mm mit einem Biegewinkel von 90° für zumindest 100 Biegezyklen gewährleistet ist. Möglich ist, dass die Antenne 4 und/oder die Hülse 5 eine Rauigkeit Rₐ von 0,4 aufweist. Die Antenne 4 und/oder die Hülse 5 können/kann aus Edelstahl (bspw. mit einer Werkstoffnummer 1.4404) hergestellt sein. Der gesamte Gefriertrockner-Produktsensor 1 oder auch der Gefriertrockner-Produktsensor 1 bis auf die Antenne 4 verfügt über eine Wärmekapazität, die vorzugsweise kleiner ist als 5 J/gK, 3 J/gK oder 2 J/gK, und/oder eine Masse, die kleiner ist als 5 g, 3 g, 1 g oder sogar 0,5 g, wobei beliebige Kombinationen der genannten oberen Grenzen für die Masse und die Wärmekapazitäten möglich sind.

In der Hülse 5 ist eine elektrische oder eine eine elektronische Steuereinheit aufweisende elektronische Baueinheit 12 angeordnet, wobei in der Baueinheit 12 die elektrischen und/oder elektronischen Bauelemente vorzugsweise auf einer Platine angeordnet sind. Die Baueinheit 12 verfügt über einen Sensor 13 sowie eine RFID-Einheit 14. Die Baueinheit 12, weitere Bauelemente und/oder Verbindungskabel zwischen der Baueinheit 12 und der Antenneneinheit 3 sind in der Hülse 5 mit einem Verguss 15 vergossen. Beispielsweise kann als Material für den Verguss 15 ein elektrisch isolierendes Epoxid-Material eingesetzt werden.

Ist der Gefriertrockner-Produktsensor 1 in einem Trocknungsbehälter angeordnet, so befindet sich der Sensor 13 in einer Höhe 16 über einem Boden des Trocknungsbehälters. Hierbei sind/ist die Länge 10 und/oder die Höhe 16 so bemessen, dass die Antenne 4 frei ohne Benetzung aus dem in dem Trocknungsbehälter angeordneten Trocknungsgut herausragt. Vorzugsweise ist die Antenne 4 durch eine Bohrung oder einen Kanal zwischen einem Stopfen und dem Trocknungsbehälter aus dem Trocknungsbehälter herausgeführt und oberhalb des Stopfens durch plastisches Umbiegen abgewinkelt, so dass sich der Gefriertrockner-Produktsensor 1 über die Abwinklung an der Oberseite des Stopfens oder Trocknungsbehälters abstützen kann.

Für das in Fig. 1 dargestellte Ausführungsbeispiel verfügt der Gefriertrockner-Produktsensor 1 lediglich über einen Sensor 13. Möglich ist aber durchaus auch, dass der Gefriertrockner-Produktsensor 1 über mehrere Sensoren 13a, 13b, ... verfügt, die dann in unterschiedlichen Höhen 16a, 16b, 16c die Temperatur des Trocknungsguts erfassen können. Möglich ist, dass ein Sensor 13 die Temperatur in einer Höhe 16 erfasst oder dieser über eine gewisse Höhenerstreckung 17 verfügt, im Bereich welcher dann der Sensor 13 eine (gemittelte) Temperatur misst. Der Gefriertrockner-Produktsensor 1 kann im Bereich der Mantelfläche der Hülse 5 eine sichtbare Markierung 18 aufweisen, mittels welcher für den Benutzer indiziert wird, an welcher Stelle der Hülse 5 der Sensor 13 angeordnet ist und somit die Messung der Temperatur erfolgt.

Der Gefriertrockner-Produktsensor 1 ist insbesondere dampfsterilisierbar bei Temperaturen bis 135 °C, wobei die eingesetzten Materialien derart gewählt sind und der Verguss 15 derart ausgebildet ist, dass eine Dampfsterilisierung über zumindest 100 Zyklen möglich ist. Für sämtliche eingesetzten oder der Umgebung ausgesetzten Materialien werden Materialien eingesetzt, welche bei Klassifikation als "produktberührend" über ein FDA-Zertifikat verfügen.

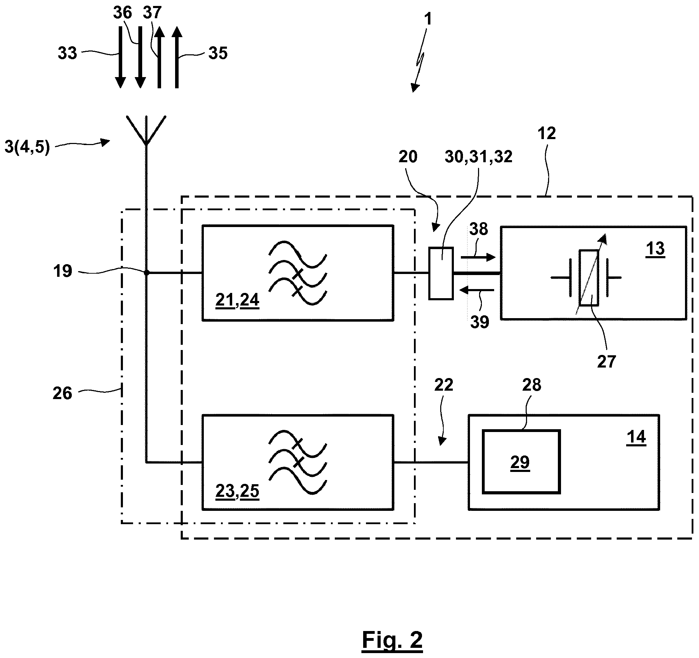

**Fig. 2** zeigt stark schematisiert einen elektrischen Schaltplan für den Gefriertrockner-Produktsensor 1. Die Antenneneinheit 3 ist über eine Verzweigung 19 in einem ersten Leitungsstrang 20 über einen ersten Filter 21 mit dem Sensor 13 verbunden. Des Weiteren ist die Antenneneinheit 3 über die Verzweigung 19 in einem zweiten Leitungsstrang 22 über einen zweiten Filter 23 mit der RFID-Einheit 14 verbunden. Der erste Leitungsstrang 20 weist einen (in Richtung von der Antenneneinheit 3 zu dem Sensor 13 wirksamen) Demodulator 30 sowie einen (in Richtung von dem Sensor 13 zu der Antenneneinheit 3 wirksamen) Modulator 31 auf, wobei der Demodulator 30 und der Modulator 31 vorzugsweise zwischen dem Filter 21 und dem Sensor 13 angeordnet sind. Möglich ist, dass der Demodulator 30 und/oder der Modulator 31 eine Diode 32 mit einem nachgeordneten Tiefpass oder einer Kapazität aufweist.

Vorzugsweise handelt es sich bei dem ersten Filter 21 um einen Hochpass 24, während der zweite Filter 23 ein Tiefpass 25 ist. Der Hochpass 24 und der Tiefpass 25 weisen hinsichtlich ihrer Durchgängigkeit keine Überlappung auf. Möglich ist auch, dass die Filter 21, 23 als Bandpassfilter ohne Überlappung ausgebildet sind. Möglich ist des Weiteren, dass die Verzweigung 19 und die Filter 21, 23 von einer Frequenzweiche 26 oder einem sogenannten Diplexer ausgebildet werden, an dessen Eingang die Antenneneinheit 3 angeschlossen ist und an dessen Ausgänge der Sensor 13 und die RFID-Einheit 14 angeschossen sind.

Erfindungsgemäß bildet der Sensor 13 ein schwingungsfähiges System, wobei der Schwingkreis des Sensors 13 mit einem Quarz 27 ausgebildet ist. Die Resonanzfrequenz des Schwingkreises ist infolge der Temperaturabhängigkeit des Verhaltens des Quarzes 27 abhängig von der Temperatur, welcher der Sensor 13 ausgesetzt ist.

Die RFID-Einheit 14 weist einen Speicher 28 auf. In dem Speicher 28 ist eine für den Sensor 13 spezifische Kenngröße 29 abgespeichert.

Bei der Kenngröße 29 kann es sich bspw. um eine Identifikations-Kenngröße handeln, mittels welcher ein spezifischer Sensor 13 aus einer Gruppe von Sensoren 13a, 13b, ... mehrerer Gefriertrockner-Produktsensoren 1 eindeutig identifiziert werden kann. Eine derartige Identifikations-Kenngröße kann bspw. eine laufende Nummer oder eine Serien- oder Produktnummer sein.

Alternativ oder zusätzlich kann die Kenngröße 29 eine Kalibrier-Kenngröße sein, die im Zusammenhang steht mit der für jeden Sensor 13a, 13b, ... spezifischen Abhängigkeit der Resonanzfrequenz von der auf den Sensor 13a, 13b, ... wirkenden Temperatur. Eine derartige Kalibrier-Kenngröße kann bspw. ein Kalibrierfaktor sein, eine Kalibrierkurve, eine Kalibrierfunktion (insbesondere für einen spezifischen Sensor 13 spezifische Koeffizienten einer Funktion oder eines Polynoms zur Modellierung der Abhängigkeit) oder ein Kalibrier-Kennfeld sein.

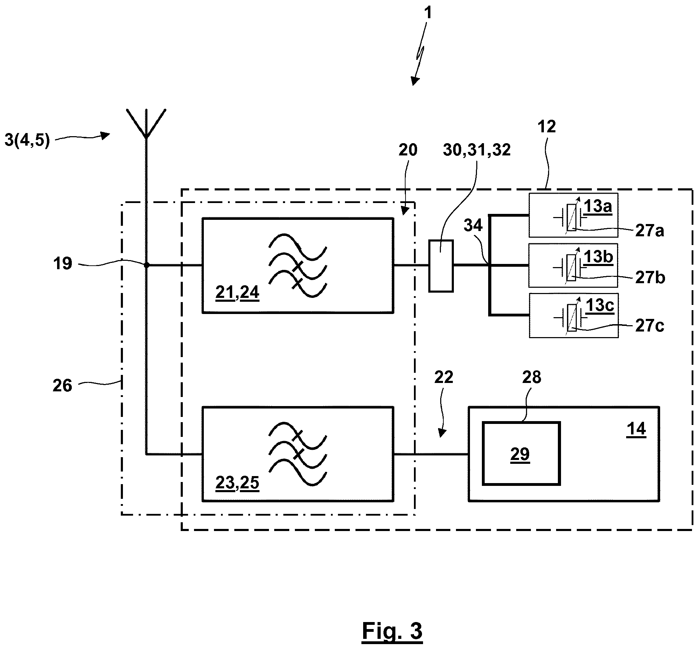

**Fig. 3** zeigt schematisch einen Gefriertrockner-Produktsensor 1, in welchem in dem Leitungsstrang 20 über eine Verzweigung 34 in elektrischer Parallelschaltung drei in unterschiedlichen Höhen 16 wirksame Sensoren 13a, 13b, 13c angeordnet sind. Hierbei nutzen vorzugsweise sämtliche Sensoren 13a, 13b, 13c denselben Demodulator 30 und denselben Modulator 21.

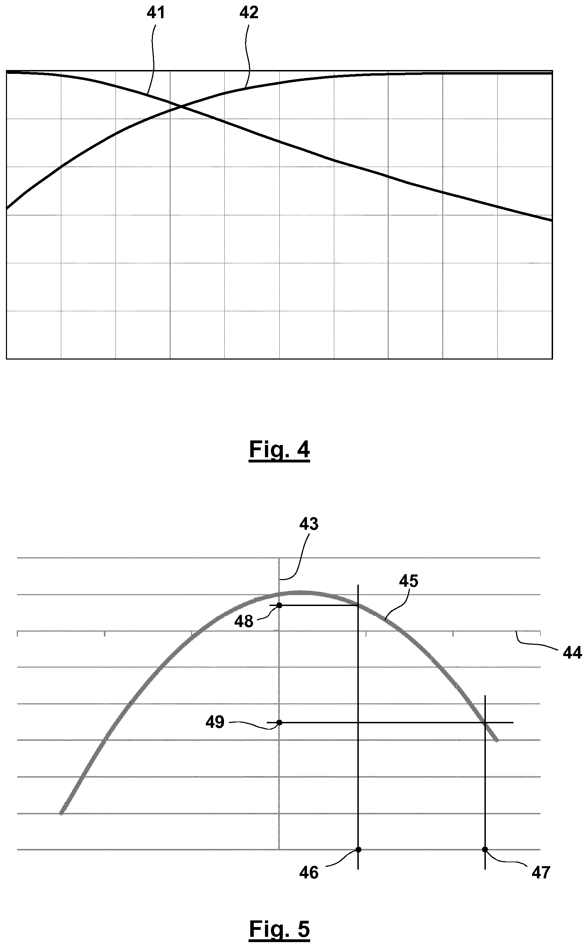

**Fig. 4** zeigt eine Filtercharakteristik 41 des Tiefpasses 25 und eine Filtercharakteristik 42 des Hochpasses 24 im Frequenzbereich bei Verwendung einer Abszisse mit linearer Teilung, wobei die hier minimal dargestellte Frequenz für die beispielhaft genannten Sensorfrequenzen, Trägerfrequenzen und RFID-Frequenz 800 MHz betragen kann, während die maximale dargestellte Frequenz 3 GHz beträgt.

**Fig. 5** zeigt beispielhaft eine Modellierung einer Abhängigkeit einer Resonanzfrequenz 43 des den temperatur-sensitiven Quarz aufweisenden Schwingkreises des Sensors 13 von der hierauf wirkenden Temperatur 44 mittels einer Kalibrierfunktion 45. Hierbei ist die Kalibrierfunktion 45 eine beliebige Funktion oder Kurve wie bspw. ein Polynom zweiter Ordnung. In diesem Fall ist eine in dem Speicher 28 der RFID-Einheit 14 gespeicherte Kenngröße 29 mindestens ein Koeffizient des Polynoms. Allerdings wird hier die Kalibrierfunktion 45 ausschließlich in dem rechten oder linken Teilast von dem Scheitelpunkt genutzt.

Dies kann beispielhaft für einen exemplarischen Messbereich 46 erläutert werden. Findet der Gefriertrockner-Produktsensor 1 Einsatz in einem Messbereich zwischen einer minimalen Temperatur 46 und einer maximalen Temperatur 47, verändert sich in diesem Temperaturbereich die Resonanzfrequenz 43 von einer maximalen Resonanzfrequenz 48 bei der minimalen Temperatur 46 in stetiger Weise bis zu einer minimalen Resonanzfrequenz 49 bei der maximalen Temperatur 47. Die Resonanzfrequenzen 48, 49 begrenzen somit das Frequenzband dieses spezifischen Sensors 13. Aus der Kalibrierfunktion 45 kann somit aus jeder Resonanzfrequenz, die sich infolge der Anregung des Sensors 13 über die Prozesssteuerung 2 ergibt, jeweils die zugeordnete Temperatur ermittelt werden. Die maximale Resonanzfrequenz 48 und die minimale Resonanzfrequenz 49 können bspw. in einem Bereich von 32 KHz bis 67 KHz oder 170 KHz bis 250 KHz liegen.

**Fig. 6** zeigt stark schematisiert eine Gefriertrocknungsanlage 50. Die Gefriertrocknungsanlage 50 verfügt über einen (insbesondere automatisierten) Zuführbereich, in welchem Trocknungsgefäße, von welchen einige mit einem Gefriertrockner-Produktsensor 1 ausgestattet sind, über Fördermittel wie Förderbänder, Schlitten u. ä. einem Gefriertrockner zugeführt werden, und den Gefriertrockner selbst, im Bereich dessen der Gefriertrocknungsprozess durchgeführt wird. Hierbei dient die Prozesssteuerung 2 sowohl der Steuerung des Betriebs in dem Zuführbereich als auch der Steuerung der Gefriertrocknung.

Fig. 6 zeigt die Wechselwirkung des Gefriertrockner-Produktsensors 1 eines in dem Zuführbereich geförderten Trocknungsgefäßes mit der Prozesssteuerung 2. Die Prozesssteuerung 2 verfügt über eine zentrale Steuereinheit 51, an welche eine RFID-Sende- und/oder -Empfangseinheit 52 und eine Sensor-Sende- und/oder -Empfangseinheit 53 angeschlossen sind. Die RFID-Sende- und/oder -Empfangseinheit 52 ist im Zuführbereich angeordnet, wobei der Gefriertrockner-Produktsensor 1 mit einem kleinen Abstand, insbesondere von weniger als 50 cm, weniger als 20 cm, weniger als 10 cm, weniger als 2 cm oder sogar weniger als 1 cm, an der RFID-Sende- und/oder -Empfangseinheit 52 vorbeigeführt wird. Hingegen ist die Sensor-Sende- und/oder -Empfangseinheit 53 in dem Gefriertrockner, nämlich einer Trocknungskammer derselben, angeordnet.

Durchläuft der Gefriertrockner-Produktsensor 1 den Zuführbereich, wird der Gefriertrockner-Produktsensor 1 mit kleinem Abstand an der RFID-Sende- und/oder -Empfangseinheit 52 vorbeigeführt. Die RFID-Sende- und/oder -Empfangseinheit 52 erzeugt in dem Moment der Vorbeiführung des Gefriertrockner-Produktsensors 1 ein RFID-Antenneneingangssignal 33, welches in im Folgenden noch näher erläuterter Weise ein Auslesen mindestens einer Kenngröße 29 aus dem Speicher 28 der RFID-Einheit 14 sowie die Übertragung der mindestens einen Kenngröße 29 an die RFID-Sende- und/oder -Empfangseinheit 52 über ein RFID-Antennenausgangssignal 35 ermöglicht, so dass die mindestens eine Kenngröße 29 in der Steuereinheit 51 zur Verfügung steht. Damit kann mittels der Prozesssteuerung 2 der an der RFID-Sende- und/oder -Empfangseinheit 52 vorbeigeführte Gefriertrockner-Produktsensor 1 eindeutig identifiziert werden und es können auch unter Umständen spezifische Kalibrier-Kenngrößen übertragen werden. Unter Umständen ermöglicht die Prozesssteuerung 2 dann auch eine Zuordnung des derart identifizierten Gefriertrockner-Produktsensor 1 zu dem Ort, an welchem dann später das Trocknungsgefäß mit diesem Gefriertrockner-Produktsensor 1 in dem Gefriertrockner angeordnet wird. Hierbei kann die Zuordnung des Ortes lediglich in Form der Spezifikation der Stellfläche, auf welcher das Trocknungsgefäß mit diesem Gefriertrockner-Produktsensor 1 angeordnet ist, erfolgen. Möglich ist aber auch, dass zusätzlich spezifiziert werden kann, an welchem Ort auf der Stellfläche das Trocknungsgefäß mit dem Gefriertrockner-Produktsensor 1 angeordnet ist.

**Fig. 7** zeigt die Wechselwirkung zwischen der Sensor-Sende- und/oder -Empfangseinheit 53 während der Gefriertrocknung. Die Sensor-Sende- und/oder -Empfangseinheit 53 erzeugt ein Sensor-Antenneneingangssignal 36, welches (in im Folgenden noch näher beschriebener Weise) den Schwingkreis des Sensors 13 zu Schwingungen anregt. Auf Grundlage eines von dem Sensor 13 erzeugten Sensor-Antennenausgangssignals 37 und der darin enthaltenen temperaturabhängigen Resonanzfrequenz des Schwingkreises kann dann die Ermittlung der Temperatur erfolgen.

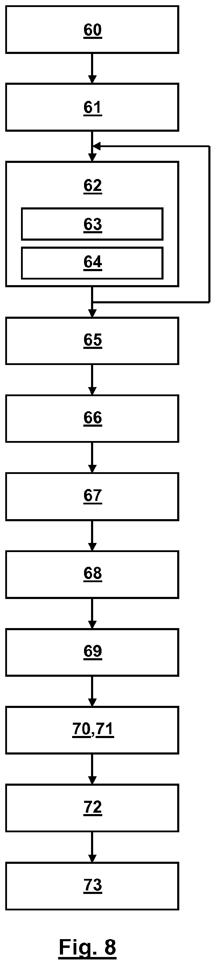

**Fig. 8** zeigt schematisch ein Verfahren zum Betrieb eines Gefriertrockner-Produktsensors 1:
In einem Verfahrensschritt 60 erfolgt ein Beschreiben des Speichers 28 einer RFID-Einheit 14 des Gefriertrockner-Produktsensors 1 mit mindestens einer Kenngröße 29. Dies kann werksseitig bei der Herstellung des Gefriertrockner-Produktsensors 1 oder auch bei dem Betreiber der Gefriertrocknungsanlage erfolgen.

In einem Verfahrensschritt 61 wird dann ein Trocknungsbehälter mit darin angeordnetem Trocknungsgut mit einem Gefriertrockner-Produktsensor 1 ausgestattet.

In einem Verfahrensschritt 62 wird insbesondere über eine Prozesssteuerung 2 mit einem automatischen Beladen des Gefriertrockners der Gefriertrockner-Produktsensor 1 in dem Trocknungsbehälter an der RFID-Sende- und/oder -Empfangseinheit 52 vorbeigeführt (vgl. Fig. 6). Hierbei erzeugt in einem Verfahrensschritt 63 die RFID-Sende- und/oder-Empfangseinheit 52 das RFID-Antenneneingangssignal 33, welches durch die Antenneneinheit 3 des Gefriertrockner-Produktsensors 1 empfangen wird, womit eine elektrische Leistungsversorgung der RFID-Einheit 14 erfolgt. Auf dieser Grundlage wird die RFID-Einheit 14 in die Lage versetzt, in einem Verfahrensschritt 64 das RFID-Antennenausgangssignal 35 zu erzeugen, welches dann über die Antenneneinheit 3 an die RFID-Sende- und/oder -Empfangseinheit 52 übertragen wird. Auf diese Weise erfährt die RFID-Sende- und/oder -Empfangseinheit 52 und die Steuereinheit 51, um welchen Gefriertrockner-Produktsensor 1 es sich handelt (auf Grundlage der mit dem RFID-Antennenausgangssignal 35 übertragenen Identifikations-Kenngröße) und/oder die dem spezifischen Gefriertrockner-Produktsensor 1 zugeordneten Kalibrier-Kenngrößen (auf Grundlage des in dem RFID-Antennenausgangssignal 35 enthaltenen Kalibrierfaktors, der Kalibrierkurve, der Kalibrierfunktion oder des Kalibrier-Kennfelds).

In einem Verfahrensschritt 65 erfolgt das Befüllen des Gefriertrockners mit einer Vielzahl von Trocknungsgefäßen. Sofern mehrere Trocknungsgefäße einen Gefriertrockner-Produktsensor 1 aufweisen, können diese jeweils in dem Verfahrensschritt 62 unter Ausführung der Verfahrensschritte 63, 64 an der RFID-Sende- und/oder -Empfangseinheit 52 vorbeigeführt werden. Hierbei ordnet die automatische Prozesssteuerung und Förderung der Trocknungsgefäße den spezifischen identifizierten Gefriertrockner-Produktsensor 1 den Aufstellort des zugeordneten Trocknungsgefäßes in der Trocknungskammer des Gefriertrockners zu.

Vor und/oder während des Gefriertrocknungsprozesses erfolgt dann die Erfassung der Temperatur über den Gefriertrockner-Produktsensor 1.

Hierzu wird in einem Verfahrensschritt 66 eine Sensor-Anregungsfrequenz derart gewählt oder geschätzt, dass diese möglichst genau der Resonanzfrequenz des Schwingkreises des Sensors 13 entspricht. Es wird dann ein Sensor-Antenneneingangssignal 36 erzeugt, in welchem eine Überlagerung eines Trägersignals, welches eine Trägerfrequenz aufweist, und eines Sensor-Anregungssignals, welches die Sensor-Anregungsfrequenz aufweist, erfolgt ist.

In einem Verfahrensschritt 67 erfolgt dann die Übertragung des Sensor-Antenneneingangssignals 36 von der Sensor-Sende- und/oder -Empfangseinheit 53 an die Antenneneinheit 3. Die Trägerfrequenz des Sensor-Antenneneingangssignals 36 ist derart gewählt, dass in einem Verfahrensschritt 68 mittels der Frequenzweiche 36 das Sensor-Antenneneingangssignal 36 ausschließlich oder vorrangig den Leitungsstrang 20 zugeführt wird.

In einem Verfahrensschritt 69 wird dann mittels des Demodulators 30 aus dem Sensor-Antenneneingangssignal 36 ein Sensor-Anregungssignal 38 erzeugt, mittels dessen der Schwingkreis des Sensors 13 beaufschlagt wird und zu erzwungenen Schwingungen angeregt wird.

In einem Verfahrensschritt 70 wird dann das Sensor-Antenneneingangssignal 36 abgeschaltet. Dies hat zur Folge, dass der Schwingkreis des Sensors 13 ausschwingen kann, womit der Sensor 13 in einem Verfahrensschritt 71 ein Sensor-Ausschwingsignal 39 erzeugt.

In einem Verfahrensschritt 72 wird das Sensor-Ausschwingsignal 39 mittels des Modulators 31 in ein Sensor-Antennenausgangssignal 37 umgewandelt, indem dem Sensor-Ausschwingsignal 39 ein Trägersignal überlagert wird.

In einem Verfahrensschritt 73 wird dann das Sensor-Antennenausgangssignal 37 von der Antenneneinheit 3 an die Sensor-Sende- und/oder -Empfangseinheit 53 übertragen. Da in dem Sensor-Antennenausgangssignal 37 die Frequenz des Sensor-Ausschwingsignals enthalten ist, kann aus dieser von der Prozesssteuerung 2 die Resonanzfrequenz und hierüber die Temperatur ermittelt werden.

Während des Gefriertrocknungsprozesses können wiederholt, unter Umständen auch mit kleinen Zeitabständen und/oder zu definierten Ereignissen des Gefriertrocknungsprozesses, Messungen der Temperatur durchgeführt werden.

Vorzugsweise beträgt die Trägerfrequenz für das Sensor-Antenneneingangssignal 36 und das Sensor-Antennenausgangssignal 37 2,4 GHz bis 2,5 GHz, während die Sensor-Anregungsfrequenz und damit auch die Resonanzfrequenz des Schwingkreises des Sensors 13 bspw. in einem Bereich von 32 KHz bis 67 KHz oder 170 KHz bis 250 KHz liegen kann. Der Hochpassfilter 24 lässt das Sensor-Antenneneingangssignal 36 und das Sensor-Antennenausgangssignal 37 durch, während der Tiefpass 25 diese Signale nicht durchlässt.

Vorzugsweise weisen das RFID-Antenneneingangssignal 33 und das RFID-Antennenausgangssignal 35 eine Frequenz von 868 MHz oder 915 MHz auf, wobei auch Änderungen von ± 5 % oder ± 10 % von diesen Frequenzen möglich sind.

Besondere Bedeutung kommt einer Wahl einer Sensor-Anregungsfrequenz in dem Verfahrensschritt 66 zu. Erfolgt eine Wahl einer Sensor-Anregungsfrequenz, welche in einem zu großen Ausmaß abweicht von der temperaturabhängigen Resonanzfrequenz des Schwingkreises des Sensors 13, führt der Schwingkreis erzwungene Schwingungen mit einer kleinen Amplitude aus, was zur Folge hat, dass das Sensor-Antennenausgangssignal 37 kein signifikantes Signal in Form des Sensor-Ausschwingsignals 39 beinhaltet. Somit kann durch Variation der Sensor-Anregungsfrequenz ein Abtasten derart erfolgen, dass die Resonanzfrequenz "gesucht" wird, was daran erkannt werden kann, dass sich ein signifikantes Sensor-Ausschwingsignal 39, unter Umständen mit einer Amplitude oberhalb eines vorgegebenen Schwellwerts, ergibt. Ist einmal eine zutreffende Sensor-Anregungsfrequenz gewählt worden, kann von hier ausgehend während des Gefriertrocknungsprozesses der Temperaturgang "nachgefahren" werden. Möglich ist bspw., dass sich die Resonanzfrequenz des Schwingkreises des Sensors 13 um 15 Hertz je Kelvin ändert, während unter Umständen der Schwingkreis so gering gedämpft ist, dass für die Herbeiführung erzwungene Schwingungen mit einer ausreichenden Amplitude eine Anregung im Umgebungsbereich der Resonanzfrequenz von ± 2 bis 3 Hz erforderlich ist. Möglich ist, dass für die Wahl der Sensor-Anregungsfrequenz auch ein Schätzwert oder ein Erfahrungswert aus dem Gefriertrocknungsprozess abgeleitet wird.

Weitere Bedeutung kann der Wahl der Trägerfrequenz in dem Sensor-Antenneneingangssignal 36 und dem Sensor-Antennenausgangssignal 37 zukommen. So kann hier unter Umständen für gängige, gesetzliche Bandbreiten von Trägersignalen ein Trägerfrequenz-Hopping geboten sein, um eine gleichmäßige Auslastung des Bandes zu gewährleisten.

Möglich ist alternativ oder kumulativ auch, dass eine Veränderung der Trägerfrequenz erfolgt, um trotz sich verändernder Prozessbedingungen einen guten Wirkungsgrad und eine gute Signalstärke zu gewährleisten. So kann sich bspw. infolge von temperaturbedingten Verformungen der Übertragungsweg der Sensor-Antenneneingangssignale 36 und Sensor-Antennenausgangssignale 37 verändern, womit eine optimale Signalübertragung zwischen der Antenneneinheit 3 und der Sensor-Sende- und/oder -Empfangseinheit 53 eine Veränderung der Trägerfrequenz erfordert. Möglich ist hierbei, dass in der Prozesssteuerung 2 eine Liste von Trägerfrequenzen abgelegt ist, welche sich als besonders effektiv erwiesen haben. Es kann dann eine Variation zwischen den einzelnen in der Liste abgelegten Frequenzen erfolgen mit der Suche nach der Frequenz, welche zu der größten Signalstärke führt. Möglich ist, dass eine derartige Liste auch während eines einzigen Gefriertrocknungsprozesses oder aufeinander folgender Gefriertrocknungsprozesse adaptiert wird, in dem auch abweichend zu den in der Liste abgespeicherten Frequenzen zu definierten Zeitpunkten über einen Zufallsgenerator oder über eine Suchstrategie weitere vorteilhafte Frequenzen gesucht werden. Stellt sich dann eine Frequenz tatsächlich als effektiv dar, erfolgt eine Ergänzung der Liste der gespeicherten Frequenzen oder der Austausch einer gespeicherten Frequenz gegen die neue Frequenz.

Angestrebt wird, dass während des Gefriertrocknungsprozesses das Trocknungsgut in den Trocknungsbehältern möglichst mit wenig Leistung der Sensor-Antenneneingangssignale 36 und Sensor-Antennenausgangssignale 37 beaufschlagt wird. Möglich ist auch, dass eine Leistungsregelung der Sensor-Sende- und/oder -Empfangseinheit 53 derart erfolgt, dass diese lediglich ein Sensor-Antenneneingangssignal 36 erzeugt, welches eine ausreichende Signalstärke des Sensor-Ausschwingsignals 39 bzw. des Sensor-Antennenausgangssignals 37 gewährleistet.

Möglich ist, dass die Filter 21, 23 einen Beitrag liefern zur Anpassung der Impedanz der Antenneneinheit 3. Durch die mittels der Filter 21, 23 bereitgestellte Impedanz kann somit ein Unterschied der Fußpunktimpedanz zwischen den Leitungszweigen 20, 22 ausgeglichen werden.

Finden in einem Gefriertrockner während der Gefriertrocknung mehrere Gefriertrockner-Produktsensoren 1a, 1b, 1c, ... Einsatz, weisen diese (innerhalb der zuvor spezifizierten Bänder für die Sensor-Resonanzfrequenzen) unterschiedliche, nicht überlappende Frequenzbänder für die Resonanzfrequenzen der Sensoren 13a, 13b, ... auf. Anhand der Identifikation der jeweiligen Gefriertrockner-Produktsensoren 1a, 1b, 1c, ... kann für den jeweiligen Sensor 13a, 13b, 13c in der Steuereinheit 51 das dem spezifischen Gefriertrockner-Produktsensor 1 zugeordnete Frequenzband ermittelt werden, womit dann die Sensor-Sende- und/oder -Empfangseinheit 53 für die Erfassung der unterschiedlichen Temperaturen sukzessive Sensor-Anregungssignale in den unterschiedlichen Frequenzbändern erzeugen kann und dann auch eine Zuordnung der ermittelten Resonanzfrequenz zu dem spezifischen Gefriertrockner-Produktsensor 1a, 1b, ... und damit auch zu dem Ort des Trocknungsgefäßes in dem Gefriertrockner erfolgen kann. Möglich ist aber auch, dass das Frequenzband des Gefriertrockner-Produktsensors 1 als eine Kenngröße 29 in dem Speicher 28 der RFID-Einheit 14 abgespeichert ist und von der RFID-Sende- und/oder -Empfangseinheit 52 ausgelesen wird.

Vorzugsweise hat der Sensor 13 zumindest einen Messbereich für die Temperatur von - 60 °C bis + 140 °C, wobei hier die Genauigkeit bspw. ± 0,5 K betragen kann. Die RFID-Einheit 14 kann einen Speicher 28 mit einer Größe von zumindest 56 Bit aufweisen. In diesem Speicher 28 können eine Seriennummer, Koeffizienten einer Kalibrierfunktion 45 und ein Qualitätsindex gespeichert sein, wobei diese Daten auch verschlüsselt gespeichert sein können. Möglich ist, dass das Anregen und Auslesen der RFID-Einheit 14 während der Förderbewegung des Trocknungsgefäßes mit dem Gefriertrockner-Produktsensor 1 erfolgt oder die Förderbewegung für das Anregen und Auslesen unterbrochen wird.

Vorzugsweise wird dafür Sorge getragen, dass keine gegenseitige Beeinflussung des Messbetriebs des Sensors 13 einerseits und des Lesebetriebs der RFID-Einheit 14 andererseits erfolgt. Beispielsweise kann eine Übertragung zwischen der RFID-Einheit 14 und der RFID-Sende- und/oder -Empfangseinheit 52 so ausgerichtet werden, dass diese nicht in Richtung einer Tür des Gefriertrockners orientiert ist. Möglich ist bspw. auch, dass ein Fenster oder eine Tür des Gefriertrockners mit einem Zusatz, einer Schicht oder Beschichtung mit verringerter Strahlungsdurchlässigkeit ausgestattet ist, wie dies in der europäischen Patentanmeldung EP 3 070 425 A1 offenbart ist.

Die RFID-Sende- und /oder -Empfangseinheit 52 kann als konventionell erhältliches UHF RFID-Schreib-/Lesegerät nach EPCglobal v1.2.0 Standard ausgebildet sein. Als RFID-Einheit 14 kann insbesondere ein RFID-Chip "NXP Semiconductor SL3S1013FTB0" eingesetzt werden.

Für eine besondere Ausführungsform der Erfindung erfolgt ein gleichzeitiges Auslesen der RFID-Einheit und des Sensors 13, wozu insbesondere eine geeignete Schaltungsauslegung derart gewählt ist, dass das gleichzeitige Auslesen ohne gegenseitige Beeinflussung möglich ist.

Die wirksame Länge der Antenneneinheit 3 ist auf die halbe Wellenlänge für die Beaufschlagung des Sensors 13 mit der Sensorfrequenz ausgelegt. Möglich ist aber auch eine Auslegung der wirksamen Wellenlänge der Antenneneinheit 3 auf ein Viertel der Wellenlänge. Die RFID-Einheit 14 wird durch schaltungstechnische Maßnahmen auf die resultierende Fußpunktimpedanz der Antenneneinheit 3 angepasst.

Möglich ist auch, dass auf die Spitze 11 der Antenne 4 eine Glasperle aufgeschmolzen ist. Des Weiteren ist möglich, dass der Benutzer über ein Bedienfeld angibt, an welchem Ort ein identifizierter Gefriertrockner-Produktsensor 1 in dem Gefriertrockner angeordnet ist.

Möglich ist auch, dass die RFID-Einheit 14 durch die RFID-Sende- und /oder -Empfangseinheit 52 nicht ausschließlich angeregt und ausgelesen wird. Vielmehr ist auch ein Beschreiben der RFID-Einheit 14 durch die RFID-Sende- und /oder- Empfangseinheit 52 möglich. So kann bspw. auch über mehrere Zyklen der Nutzung eines Gefriertrockner-Produktsensors 1 in der RFID-Einheit 14 gespeichert werden, wie viele Sensorzyklen der Gefriertrockner-Produktsensor 1 durchlaufen hat. Mit dem Erreichen einer vorbestimmten Zahl von zulässigen Sensorzyklen kann dann über die Prozesssteuerung 2 über eine entsprechende Warnung an dem Betreiber der Hinweis gegeben werden, dass der Gefriertrockner-Produktsensor 1 seine vorbestimmte Lebensdauer erreicht hat und ein Austausch erforderlich ist. Hierbei bezeichnet ein Zyklus jeweils einen Einsatz eines Gefriertrockner-Produktsensors 1 in einem Gefriertrockner während eines Gefriertrocknungsprozesses, wobei innerhalb eines derartigen Zyklus durchaus mehrere Temperaturmessungen erfolgen können.

In der Figurenbeschreibung wird bevorzugt auf die Ausbildung des Gefriertrockner-Produktsensors als Gefriertrockner-Temperatursensor Bezug genommen, so dass ein Sensor des Gefriertrockner-Produktsensors als Produktparameter die Temperatur des Trocknungsguts erfasst. Die Erfindung ist aber auf diese Ausgestaltung nicht eingeschränkt - vielmehr kann mittels eines erfindungsgemäßen Gefriertrockner-Produktsensors ein beliebiger Produktparameter (insbesondere auch ein Druck und/oder eine Feuchtigkeit) gemessen werden.

Für das Senden des Sensor-Antenneneingangssignals 36, das Senden des RFID-Antenneneingangssignals 33, das Empfangen des Sensor-Antennenausgangssignals 37 und das Empfangen des RFID-Antennenausgangssignals 35 kann in den Gefriertrockner und dessen Prozesssteuerung 2 dieselbe Sende- und/oder -Empfangseinrichtung verwendet werden oder es finden hierzu unterschiedliche an demselben Ort oder unterschiedlichen Orten angeordnete Sende- und/oder Empfangseinrichtungen Einsatz. Möglich ist bspw., dass benachbart unterschiedlichen Stellflächen des Gefriertrockners mehrere Sende- und/oder Empfangseinrichtungen angeordnet sind, um die Übertragungswege zu den Antenneneinheiten 3 der auf den Stellflächen angeordneten Trocknungsgefäße möglichst kurz zu halten und/oder unter Umständen mehrfach abgewinkelte Übertragungspfade zu vermeiden.

### BEZUGSZEICHENLISTE

- 1: Gefriertrockner-Produktsensor
- 2: Prozesssteuerung
- 3: Antenneneinheit
- 4: Antenne
- 5: Hülse
- 6: Boden
- 7: Durchmesser Antenne
- 8: Länge Antenne
- 9: Durchmesser Hülse
- 10: Länge Hülse
- 11: Spitze Antenne
- 12: Baueinheit
- 13: Sensor
- 14: RFID-Einheit
- 15: Verguss
- 16: Höhe
- 17: Höhenerstreckung
- 18: Markierung
- 19: Verzweigung
- 20: erster Leitungsstrang
- 21: erster Filter
- 22: zweiter Leitungsstrang
- 23: zweiter Filter
- 24: Hochpass
- 25: Tiefpass
- 26: Frequenzweiche
- 27: Quarz
- 28: Speicher
- 29: Kenngröße
- 30: Demodulator
- 31: Modulator
- 32: Diode
- 33: RFID-Antenneneingangssignal
- 34: Verzweigung
- 35: RFID-Antennenausgangssignal
- 36: Sensor-Antenneneingangssignal
- 37: Sensor-Antennenausgangssignal
- 38: Sensor-Anregungssignal
- 39: Sensor-Ausschwingsignal
- 41: Filtercharakteristik
- 42: Filtercharakteristik
- 43: Resonanzfrequenz
- 44: Temperatur
- 45: Kalibrierfunktion
- 46: minimale Temperatur
- 47: maximale Temperatur
- 48: maximale Resonanzfrequenz
- 49: minimale Resonanzfrequenz
- 50: Gefriertrocknungsanlage
- 51: Steuereinheit
- 52: RFID-Sende- und/oder-Empfangseinheit
- 53: Sensor-Sende- und/oder -Empfangseinheit
- 60: Verfahrensschritt: Beschreiben des Speichers der RFID-Einheit mit mindestens einer Kenngröße
- 61: Verfahrensschritt: Ausstatten eines Trocknungsbehälters mit einem Gefriertrockner-Produktsensor
- 62: Verfahrensschritt: Vorbeiführen des Gefriertrockner-Produktsensors an der RFID-Sende- und/oder-Empfangseinheit
- 63: Verfahrensschritt: RFID-Sende- und/oder -Empfangseinheit erzeugt das RFID-Antenneneingangssignal
- 64: Verfahrensschritt: RFID-Einheit erzeugt das RFID-Antennenausgangssignal
- 65: Verfahrensschritt: Befüllen des Gefriertrockners mit Trocknungsgefäßen
- 66: Verfahrensschritt: Wahl einer geeigneten Sensor-Anregungsfrequenz und Erzeugung des Sensor-Antenneneingangssignals
- 67: Verfahrensschritt: Übertragung des Sensor-Antenneneingangssignals an die Antenneneinheit
- 68: Verfahrensschritt: Zuführung des Sensor-Antenneneingangssignals 36 über die Frequenzweiche zu dem ersten Leitungsstrang
- 69: Verfahrensschritt: Demodulation
- 70: Verfahrensschritt: Abschalten des Sensor-Antenneneingangssignals
- 71: Verfahrensschritt: Erzeugung des Sensor-Ausschwingsignals 39
- 72: Verfahrensschritt: Modulation
- 73: Verfahrensschritt: Übertragung des Sensor-Antennenausgangssignals von der Antenneneinheit zu der Sensor-Sende- und/oder -Empfangseinheit

## Patentansprüche

1. Verwendung eines Produktsensors als Gefriertrockner-Produktsensor (1), mittels dessen während eines Gefriertrocknungsprozesses in einem Gefriertrockner ein Produktparameter eines Trocknungsguts gemessen werden kann, wobei der Gefriertrockner-Produktsensor (1) aufweist:
a) einen Sensor (13), welcher ein Messsignal für einen Produktparameter erzeugt, und
b) eine RFID-Einheit (14) mit einem Speicher (28), in welchem mindestens eine für den Gefriertrockner-Produktsensor (1) spezifische Kenngröße (29) abgespeichert werden kann, wobei
c) der Gefriertrockner-Produktsensor (1) eine Antenneneinheit (3) aufweist, welche sowohl mit dem Sensor (13) als auch mit der RFID-Einheit (14) gekoppelt ist und
ca) sowohl für eine kabellose Energieversorgung des Sensors (13), eine kabellose Anregung des Sensors (13) und/oder eine kabellose Übertragung des Messsignals des Sensors (13)
cb) als auch für eine kabellose Übertragung der für den Gefriertrockner-Produktsensor (1) spezifischen Kenngröße (29), die in der RFID-Einheit (14) gespeichert ist, insbesondere auch für eine kabellose Energieversorgung der RFID-Einheit (14) und/odereine kabellose Anregung des RFID-Einheit (14)
einsetzbar ist,
d) wobei der Sensor (13) einen Schwingkreis mit einem Quarz (27) aufweist, dessen Resonanzfrequenz von der Temperatur abhängig ist, und die spezifische Kenngröße eine Kalibrierkurve ist, welche eine Abhängigkeit der temperaturabhängigen Resonanzfrequenz des Sensors von der Temperatur abbildet.

2. Verwendung eines Produktsensors als Gefriertrockner-Produktsensor (1) nach Anspruch 1, **dadurch gekennzeichnet, dass** die Antenneneinheit (3) entsprechend der kabellosen Energieversorgung des Sensors (13), der kabellosen Anregung des Sensors (13) und/oder der kabellosen Übertragung des Messsignals des Sensors (13) dimensioniert ist.

3. Verwendung eines Produktsensors als Gefriertrockner-Produktsensor (1) nach Anspruch 1 oder 2, **dadurch gekennzeichnet, dass**
a) die Antenneneinheit (3) über einen ersten Leitungszweig (20) permanent mit dem Sensor (13) verbunden ist und über einen zweiten Leitungszweig (22) permanent mit der RFID-Einheit (14) verbunden ist und
b) in dem ersten Leitungszweig (20) ein erster Filter (21) angeordnet ist, welcher ein Signal der Antenneneinheit (3) für die kabellose Energieversorgung des Sensors (13), die kabellose Anregung des Sensors (13) und/oder die kabellose Übertragung des Messsignals des Sensors (13) aufbereitet, und
c) in dem zweiten Leitungszweig (22) ein zweiter Filter (23) angeordnet ist, welcher ein Signal der Antenneneinheit (3) für die kabellose Energieversorgung der RFID-Einheit (14), die kabellose Anregung der RFID-Einheit (14) und/oder die kabellose Übertragung der für den Gefriertrockner-Produktsensor (1) spezifischen Kenngröße (29), die in der RFID-Einheit (14) gespeichert ist, aufbereitet.

4. Verwendung eines Produktsensors als Gefriertrockner-Produktsensor (1) nach Anspruch 3, **dadurch gekennzeichnet, dass** der erste Filter (21) in dem ersten Leitungszweig (20) so dimensioniert ist, dass dieser
a) sowohl das Signal der Antenneneinheit (3) für die kabellose Energieversorgung des Sensors (13a), die kabellose Anregung des Sensors (13a) und/oder die kabellose Übertragung des Messsignals des Sensors (13a) aufbereitet und
b) das Signal der Antenneneinheit (3) für die kabellose Energieversorgung eines anderen Sensors (13b), die kabellose Anregung eines anderen Sensors (13b) und/oder die kabellose Übertragung des Messsignals eines anderen Sensors (13b) aufbereitet,
c) wobei die Sensoren (13a, 13b) in unterschiedlichen Frequenzbändern arbeiten.

5. Verwendung eines Produktsensors als Gefriertrockner-Produktsensor (1) nach einem der vorhergehenden Ansprüche, **dadurch gekennzeichnet, dass**
a) die Antenneneinheit (3) als Trag- und Halteeinrichtung für eine Befestigung des Gefriertrockner-Produktsensors (1) an einem Stopfen eines Trocknungsgefäßes ausgebildet ist oder
b) eine Trag- und Halteeinrichtung für eine Befestigung des Gefriertrockner-Produktsensors (1) an einem Stopfen eines Trocknungsgefäßes an der Antenneneinheit (3) befestigt ist.

6. Verwendung eines Produktsensors als Gefriertrockner-Produktsensor (1) nach einem der vorhergehenden Ansprüche, **dadurch gekennzeichnet, dass** die RFID-Einheit (14) auf die Fußpunktimpedanz der Antenneneinheit (3) angepasst ist.

7. Verwendung eines Produktsensors als Gefriertrockner-Produktsensor (1) nach einem der vorhergehenden Ansprüche, **dadurch gekennzeichnet, dass** mehrere Sensoren (13a, 13b, ...) vorhanden sind, welche in unterschiedlichen Höhen des Gefriertrockner-Produktsensors (1) angeordnet sind.

8. Verwendung eines Produktsensors als Gefriertrockner-Produktsensor (1) nach einem der vorhergehenden Ansprüche, **dadurch gekennzeichnet, dass** die Antenneneinheit (3) eine Antenne (4) und eine Hülse (5) aufweist.

9. Verwendung eines Produktsensors als Gefriertrockner-Produktsensor (1) nach einem der vorhergehenden Ansprüche, **dadurch gekennzeichnet, dass**
a) eine Anregung der RFID-Einheit (14) mit einer Anregungsfrequenz
aa) von 868 MHz ± 10MHz oder
ab) von 915 MHz ± 10MHz erfolgt
und/oder
b) eine Anregung des Sensors (13) mit einer Trägerfrequenz von 2,4 GHz bis 2,5 GHz erfolgt.

10. Verwendung eines Produktsensors als Gefriertrockner-Produktsensor (1) nach Anspruch 9 in Rückbeziehung auf einen der Ansprüche 3 bis 8, **dadurch gekennzeichnet, dass** der in dem zweiten Leitungszweig (22) angeordnete zweite Filter (23) eine Filtercharakteristik aufweist, die geeignet ist, um ein RFID-Antenneneingangssignal der Antenneneinheit (3) für die kabellose Energieversorgung der RFID-Einheit (14), die kabellose Anregung der RFID-Einheit (14) und/oder die kabellose Übertragung der für den Gefriertrockner-Produktsensor (1) spezifischen Kenngröße (29), die in der RFID-Einheit (14) gespeichert ist,
a) sowohl dann aufzubereiten, wenn das RFID-Antenneneingangssignal die RFID-Einheit (14) mit einer Anregungsfrequenz von 868 MHz ± 20MHz anregt,
b) als auch dann aufzubereiten, wenn das RFID-Antenneneingangssignal die RFID-Einheit (14) mit einer Anregungsfrequenz von 915 MHz ± 20MHz anregt.

11. Verwendung eines Produktsensors als Gefriertrockner-Produktsensor (1) nach einem der Ansprüche 3 bis 10, **dadurch gekennzeichnet, dass** in dem ersten Leitungszweig (20) und/oder dem zweiten Leitungszweig (22) ein Modulator und/oder ein Demodulator angeordnet sind/ist.

12. Verwendung eines Sets von Produktsensoren als Set von Gefriertrockner-Produktsensoren (1) nach einem der Ansprüche 3 bis 11, **dadurch gekennzeichnet, dass**
a) ein erster Gefriertrockner-Produktsensor (1a) einen ersten Sensor (13a) aufweist, welcher in einem ersten Frequenzband arbeitet,
b) ein zweiter Gefriertrockner-Produktsensor (1b) einen zweiten Sensor (13b) aufweist, welcher in einem zweiten Frequenzband arbeitet, welches von dem ersten Frequenzband abweicht, und
c) in den ersten Leitungszweigen (20a, 20b) des ersten Sensors (13a) und des zweiten Sensors (13b) baugleiche und gleich dimensionierte Filter (21a, 21b) angeordnet sind, welche das Signal der Antenneneinheit (3a, 3b) für die kabellose Energieversorgung sowohl des ersten Sensors (13a) als auch des zweiten Sensors (13b), die kabellose Anregung sowohl des ersten Sensors (13a) als auch des zweiten Sensors (13b) und/oder die kabellose Übertragung des Messsignals sowohl des ersten Sensors (13a) als auch des zweiten Sensors (13b) aufbereiten.

13. Trocknungsgefäß für die Trocknung eines Trocknungsguts in einem Gefriertrockner mit
a) einem Trocknungsbehälter,
b) einem Stopfen, mit welchem
ba) in einer ersten Betriebsstellung eine Öffnung des Trocknungsbehälters fluidoffen verschlossen ist und
bb) in einer zweiten Betriebsstellung die Öffnung des Trocknungsbehälters fluiddicht verschlossen ist, und
c) einem als Gefriertrockner-Produktsensor (1) verwendeten Produktsensor gemäß einem der vorhergehenden Ansprüche.

14. Verfahren zum Betrieb eines als Gefriertrockner-Produktsensor (1) verwendeten Produktsensors nach einem der Ansprüche 3 bis 11 mit folgenden Verfahrensschritten:
a) Anregung eines zweiten Leitungszweigs (22) mit der RFID-Einheit (14) über die Antenneneinheit (3) durch eine RFID-Sende- und/oder -Empfangseinheit (52) mit einem RFID-Antenneneingangssignal (33),
b) kabellose Übertragung mindestens einer für den Gefriertrockner-Produktsensor (1) spezifischen Kenngröße (29) von dem zweiten Leitungszweig (22) mittels eines RFID-Antennenausgangssignals (35) über die Antenneneinheit (3) an die oder eine RFID-Sende- und/oder -Empfangseinheit (52),
c) Anregung eines ersten Leitungszweigs (20) durch eine Sensor-Sende- und/oder - Empfangseinheit (53) über die Antenneneinheit (3) mittels eines Sensor-Antenneneingangssignals (36), in dem ein Trägersignal und ein Sensor-Anregungssignal (38) überlagert sind,
d) Demodulation des Sensor-Antenneneingangssignals (38) zu einem eine Sensor-Anregungsfrequenz aufweisenden Sensor-Anregungssignal (38) und Anregung des Sensors (13) mit dem Sensor-Anregungssignal (38),
e) Deaktivierung der Anregung des ersten Leitungszweigs (20) und damit Deaktivierung der Anregung des Sensors (13) mit dem Sensor-Anregungssignal (38),
f) Erzeugung eines Sensor-Ausschwingsignals (39) des Sensors (13) auf Grundlage des transienten Ausschwingverhaltens des Sensors (13) infolge der vorangegangenen Anregung mit dem Sensor-Anregungssignal (38),
g) Modulation des Sensor-Ausschwingsignals (39) mit einem Trägersignal zu einem Sensor-Antennenausgangssignal (37),
h) Beaufschlagung der Antenneneinheit (3) mit dem Sensor-Antennenausgangssignal (37) und
i) kabellose Übertragung des Sensor-Antennenausgangssignals (37) von der Antenneneinheit (3) an die oder eine Sensor-Sende- und/oder -Empfangseinheit (53).

## Claims

1. Use of a product sensor as a freeze dryer product sensor (1) by means of which it is possible to measure a product parameter of a drying good during a freeze drying process in a freeze dryer, the freeze dryer product sensor (1) comprising
a) a sensor (13) which generates a measurement signal for a product parameter and
b) a RFID-unit (14) comprising a storage (28) wherein it is possible to store at least one parameter (29) being specific the freeze dryer product sensor (1) wherein
c) the freeze dryer product sensor (81) comprises an antenna unit (3) which is both coupled to the sensor (13) as well as to the RFID-unit (14) and which can be used
ca) for a wireless supply of power to the sensor (13), a wireless excitation of the sensor (13) and/or a wireless transmission of the measurement signal of the sensor (13) and
cb) a wireless transmission of the parameter (29) being specific for the freeze dryer product sensor (1) which is stored in the RFID-unit (14), in particular also for a wireless supply of power to the RFID-unit (14) and/or a wireless excitation of the RFID-unit (14),
d) the sensor (13) comprising an oscillating circuit with a quartz (27) having a resonance frequency which is dependent on the temperature and the specific parameter being a calibration curve which models a dependency of the temperature dependent resonance frequency of the sensor from the temperature.

2. Use of a product sensor as a freeze dryer product sensor (1) of claim 1, **characterized in that** the antenna unit (3) is dimensioned for the wireless supply of power to the sensor (13), the wireless excitation of the sensor (13) and/or the wireless transmission of the measurement signal of the sensor (13).

3. Use of a product sensor as a freeze dryer product sensor (1) of claim 1 or 2, **characterized in that**
a) the antenna unit (3) is permanently connected via a first line branch (20) to the sensor (13) and permanently connected via a second line branch (22) to the RFID-unit (14) and
b) a first filter (21) is arranged in the first line branch (20) which processes a signal of the antenna unit (3) for the wireless supply of power to the sensor (13), for the wireless excitation of the sensor (13) and/or for the wireless transmission of the measurement signal of the sensor (13) and
c) a second filter (23) is arranged in the second line branch (22) which processes a signal of the antenna unit (3) for the wireless supply of power to the RFID-unit (14), for the wireless excitation of the RFID-unit (14) and/or for the wireless transmission of the parameter (29) being specific for the freeze dryer product sensor (1) and being stored in the RFID-unit (14).

4. Use of a product sensor as a freeze dryer product sensor (1) of claim 3, **characterized in that** the first filter (21) in the first line branch (20) is dimensioned such that the first filter (21)
a) processes the signal of the antenna unit (3) for the wireless supply of power to the sensor (13a), for the wireless excitation of the sensor (13a) and/or for the wireless transmission of the measurement signal of the sensor (13a) and
b) processes the signal of the antenna unit (3) for the wireless supply of power to another sensor (13b), for the wireless excitation of the other sensor (13b) and/or for the wireless transmission of the measurement signal of the other sensor (13b),
c) wherein the sensors (13a, 13b) have differing frequency bands.

5. Use of a product sensor as a freeze dryer product sensor (1) of one of the preceding claims, **characterized in that**
a) the antenna unit (3) is embodied as a supporting and holding device for fixing the freeze dryer product sensor (1) at a plug of a drying vessel or
b) a supporting and holding device is mounted to the antenna unit (3) for fixing the freeze dryer product sensor (1) at a plug of a drying vessel.

6. Use of a product sensor as a freeze dryer product sensor (1) of one of the preceding claims, **characterized in that** the RFID-unit (14) is adapted to the base impedance of the antenna unit (3).

7. Use of a product sensor as a freeze dryer product sensor (1) of one of the preceding claims, **characterized in that** a plurality of sensors (13a, 13b,...) is provided which are arranged at different heights of the freeze dryer product sensor (1).

8. Use of a product sensor as a freeze dryer product sensor (1) of one of the preceding claims, **characterized in that** the antenna unit (3) comprises an antenna (4) and a sleeve (5).

9. Use of a product sensor as a freeze dryer product sensor (1) of one of the preceding claims, **characterized in that**
a) the RFID-unit (14) is excited with an excitation frequency
aa) of 868 MHz +/- 10 MHz or
ab) of 915 MHz +/- 10 MHz
and/or
b) the sensor (13) is excited with a carrier frequency of 2,4 GHz to 2,5 GHz.

10. Use of a product sensor as a freeze dryer product sensor (1) of claim 9 when referring back to one of claims 3 to 8, **characterized in that** the second filter (23) arranged in the second line branch (22) comprises a filter characteristic which is suitable for also processing a RFID-antenna input signal of the antenna unit (3) for the wireless supply of power to the RFID-unit (14), for the wireless excitation of the RFID-unit and/or for the wireless transmission of the parameter (29) being specific for the freeze dryer product sensor (1) and being stored in the RRID-unit (14)
a) if the RFID-antenna input signal excites the RFID-unit (14) with an excitation frequency of 868 MHz +/- 20 MHz and
b) if the RFID-antenna input signal excites the RFID-unit (14) with an excitation frequency of 915 MHz +/- 20 MHz.

11. Use of a product sensor as a freeze dryer product sensor (1) of one of claims 3 to 10, **characterized in that** in the first line branch and/or in the second line branch (22) a modulator and/or demodulator are/is arranged.

12. Use of a set of product sensors as a set of freeze dryer product sensors of one of claims 3 to 11, **characterized in that**
a) a first freeze dryer product sensor (1a) comprises a first sensor (13a) which works in a first frequency band,
b) a second freeze dryer product sensor (1b) comprises a second sensor (13b) which works in a second frequency band which differs from the first frequency band and
c) in the first line branches (20a, 20b) of the first sensor (13a) and the second sensor (13b) filter (21 a, 21b) having the same construction and being dimensioned in the same way are arranged which process the signal of the antenna unit (3a, 3b) for the wireless supply of power to the first sensor (13a) and to the second sensor (13b), for the wireless excitation of the first sensor (13a) and of the second sensor (13b) and/or for the wireless transmission of the measurement signal of the first sensor (13a) and of the second sensor (13b).

13. Drying vessel for drying a drying good in a freeze dryer comprising
a) a drying container,
b) a plug by which
ba) in a first operating position an opening of the drying container is closed in a fluidically open way and
bb) in a second operating position the opening of the drying container is closed in a fluidically sealed way and
c) a product sensor used as a freeze dryer product sensor (1) according to one of the preceding claims.

14. Method for operating a product sensor used as a freeze dryer product sensor (1) of one of claims 3 to 11, the method comprising the following method steps:
a) excitation of a second line branch (22) with RFID-unit (14) via the antenna unit (3) by a RFID-transmitting and/or receiving unit (52) with a RFID-antenna input signal (33),
b) wireless transmission of at least one parameter (29) being specific for the freeze dryer product sensor (1) from the second line branch (22) by means of the RFID-antenna output signal (35) via the antenna unit (3) to the or a RFID-transmitting and/or receiving unit (52),
c) excitation of a first line branch (22) by a sensor transmitting and/or receiving unit (53) via the antenna unit (3) by means of a sensor antenna input signal (36) wherein a carrier signal and a sensor excitation signal (38) are superimposed,
d) demodulation of the sensor antenna input signal (38) to a sensor excitation signal (38) comprising the sensor excitation frequency and excitation of the sensor (13) with the sensor excitation signal (38),
e) deactivation of the excitation of the first line branch (20) and so deactivation of the excitation of the sensor (13) with the sensor excitation signal (38),
f) generation of a sensor transient signal (39) of the sensor (13) on the basis of the transient oscillation of the sensor (13) caused by the precedent excitation with the sensor excitation signal (38),
g) modulation of the sensor transient signal (39) with a carrier signal to a sensor antenna output signal (37)
h) biasing the antenna unit (3) with the sensor antenna output signal (37) and
i) wireless transmission of the sensor antenna output signal (37) from the antenna unit (3) to the or a sensor transmission and/or receiving unit (53).

## Revendications

1. Utilisation d'un capteur de produit en tant que capteur de produit de lyophilisateur (1), au moyen duquel, pendant un processus de lyophilisation dans un lyophilisateur, un paramètre de produit d'un produit à sécher peut être mesuré, dans lequel le capteur de produit de lyophilisateur (1) comprend :
a) un capteur (13) qui génère un signal de mesure pour un paramètre de produit et
b) une unité RFID (14) avec une mémoire (28), dans laquelle peut être enregistrée au moins une grandeur caractéristique (29) spécifique au capteur de produit de lyophilisateur (1),
dans lequel
c) le capteur de produit de lyophilisateur (1) comprend une unité d'antenne (3) qui est couplée aussi bien avec le capteur (13) qu'avec l'unité RFID (14) et qui peut être utilisée
ca) aussi bien pour une alimentation en énergie sans fil du capteur (13), une excitation sans fil du capteur (13) et/ou une transmission sans fil du signal de mesure du capteur (13)
cb) que pour une transmission sans fil de la grandeur caractéristique (29) spécifique au capteur de produit de lyophilisateur (1) qui est enregistrée dans l'unité RFID (14), plus particulièrement également pour une alimentation en énergie sans fil de l'unité RFID (14) et/ou une excitation sans fil de l'unité RFID (14)
d) dans lequel le capteur (13) comprend un circuit oscillant avec un quartz (27) dont la fréquence de résonance dépend de la température, et la grandeur caractéristique spécifique est une courbe d'étalonnage qui représente une dépendance de la fréquence de résonance, qui dépend de la température, en fonction de la température.

2. Utilisation d'un capteur de produit en tant que capteur de produit de lyophilisateur (1) selon la revendication 1, **caractérisée en ce que** l'unité d'antenne (3) est dimensionnée en fonction de l'alimentation en énergie sans fil du capteur (13), de l'excitation sans fil du capteur (13) et/ou de la transmission sans fil du signal de mesure du capteur (13).

3. Utilisation d'un capteur de produit en tant que capteur de produit de lyophilisateur (1) selon la revendication 1 ou 2, **caractérisée en ce que**
a) l'unité d'antenne (3) est reliée de manière permanente, par l'intermédiaire d'une première branche de circuit (20) avec le capteur (13), et, de manière permanente, par l'intermédiaire d'une deuxième branche de circuit (22), avec l'unité RFID (14) et
b) dans la première branche de circuit (20), est disposé un premier filtre (21) qui prépare un signal de l'unité d'antenne (3) pour l'alimentation en énergie sans fil du capteur (13), l'excitation sans fil du capteur (13) et/ou la transmission sans fil du signal de mesure du capteur (13) et
c) dans la deuxième branche de circuit (22), est disposé un deuxième filtre (23), qui prépare un signal de l'unité d'antenne (3) pour l'alimentation en énergie sans fil de l'unité RFID (14), l'excitation sans fil de l'unité RFID (14) et/ou la transmission sans fil de la grandeur caractéristique (29) spécifique du capteur de produit de lyophilisateur (1), qui est enregistrée dans l'unité RFID (14).

4. Utilisation d'un capteur de produit en tant que capteur de produit de lyophilisateur (1) selon la revendication 3, **caractérisée en ce que** le premier filtre (21) de la première branche de circuit (20) est dimensionné de façon à ce qu'il
a) prépare aussi bien le signal de l'unité d'antenne (3) pour l'alimentation en énergie sans fil du capteur (13a), l'excitation sans fil du capteur (13a) et/ou la transmission sans fil du signal de mesure du capteur (13a) et
b) prépare le signal de l'unité d'antenne (3) pour l'alimentation en énergie sans fil d'un autre capteur (13b), l'excitation sans fil d'un autre capteur (13b) et/ou la transmission sans fil du signal de mesure d'un autre capteur (13b),
c) dans lequel les capteurs (13a, 13b) fonctionnent dans des bandes de fréquences différentes.

5. Utilisation d'un capteur de produit en tant que capteur de produit de lyophilisateur (1) selon l'une des revendications précédentes, **caractérisée en ce que**
a) l'unité d'antenne (3) est conçue comme un dispositif de support et de maintien pour une fixation du capteur de produit de lyophilisateur (1) sur un bouchon d'un récipient de séchage ou
b) un dispositif de support et de maintien pour une fixation du capteur de produit de lyophilisateur (1) est fixée sur un bouchon d'un récipient de séchage au niveau de l'unité d'antenne (3).

6. Utilisation d'un capteur de produit en tant que capteur de produit de lyophilisateur (1) selon l'une des revendications précédentes, **caractérisée en ce que** l'unité RFID (14) est adaptée à l'impédance de base de l'unité d'antenne (3).

7. Utilisation d'un capteur de produit en tant que capteur de produit de lyophilisateur (1) selon l'une des revendications précédentes, **caractérisée en ce que** plusieurs capteurs (13a, 13b...) sont prévus, qui sont disposés à différentes hauteurs du capteur de produit de lyophilisateur (1).

8. Utilisation d'un capteur de produit en tant que capteur de produit de lyophilisateur (1) selon l'une des revendications précédentes, **caractérisée en ce que** l'unité d'antenne (3) comprend une antenne (4) et un manchon (5).

9. Utilisation d'un capteur de produit en tant que capteur de produit de lyophilisateur (1) selon l'une des revendications précédentes, **caractérisée en ce que**
a) une excitation de l'unité RFID (14) avec une fréquence d'excitation
aa) de 868 MHz ± 10 MHz ou
ab) de 915 MHz ± 10 MHz a lieu
et/ou
b) une excitation du capteur (13) avec une fréquence porteuse de 2,4 GHz à 2,5 GHz a lieu.

10. Utilisation d'un capteur de produit en tant que capteur de produit de lyophilisateur (1) selon la revendication 9, en référence à l'une des revendications 3 à 8, **caractérisée en ce que** le deuxième filtre (23) disposé dans la deuxième branche de circuit (22) présente une caractéristique de filtrage qui est conçue pour préparer un signal d'entrée d'antenne RFID de l'unité d'antenne (3) pour l'alimentation en énergie sans fil de l'unité RFID (14), l'excitation sans fil de l'unité RFID (14) et/ou la transmission sans fil de la grandeur caractéristique (29) spécifique au capteur de produit de lyophilisateur (1), qui est enregistrée dans l'unité RFID (14)
a) aussi bien lorsque le signal d'entrée d'antenne RFID excite l'unité RFID (14) avec une fréquence d'excitation de 868 MHz ± 20 MHz,
b) que lorsque le signal d'entrée d'antenne RFID excite l'unité RFID (14) avec une fréquence d'excitation de 915 MHz ± 20 MHz.

11. Utilisation d'un capteur de produit en tant que capteur de produit de lyophilisateur (1) selon l'une des revendications 3 à 10, **caractérisée en ce que**, dans la première branche de circuit (20) et/ou dans la deuxième branche de circuit (22), sont/est disposé un modulateur et/ou un démodulateur.

12. Utilisation d'un ensemble de capteurs de produit en tant qu'ensemble de capteurs de produit de lyophilisateur (1) selon l'une des revendications 3 à 11, **caractérisée en ce que**
a) un premier capteur de produit de lyophilisateur (1a) comprend un premier capteur (13a) qui fonctionne dans une première bande de fréquence,
b) un deuxième capteur de produit de lyophilisateur (1b) comprend un deuxième capteur (13b) qui fonctionne dans une deuxième bande de fréquence qui est différente de la première bande de fréquence et
c) dans les premières branches de circuit (20a, 20b) du premier capteur (13a) et du deuxième capteur (13b), sont disposés des filtres de conceptions identiques et de mêmes dimensions (21a, 21b), qui préparent le signal de l'unité d'antenne (3a, 3b) pour l'alimentation en énergie sans fil aussi bien du premier capteur (13a) que du deuxième capteur (13b), l'excitation sans fil aussi bien du premier capteur (13a) que du deuxième capteur (13b) et/ou la transmission sans fil du signal de mesure aussi bien du premier capteur (13a) que du deuxième capteur (13b).

13. Récipient de séchage pour le séchage d'un produit à sécher dans un lyophilisateur avec
a) un récipient de séchage,
b) un bouchon avec lequel
ba) dans une première position de fonctionnement, une ouverture du récipient de séchage est obturée de manière perméable aux fluides et
bb) dans une deuxième position de fonctionnement, l'ouverture du récipient de séchage est obturée de manière étanche aux fluides et
c) un capteur de produit utilisé en tant que capteur de produit de lyophilisateur (1) selon l'une des revendications précédentes.

14. Procédé de fonctionnement d'un capteur de produit utilisé en tant que capteur de produit de lyophilisateur (1) selon l'une des revendications 3 à 11, avec les étapes suivantes :
a) excitation d'une deuxième branche de circuit (22) avec l'unité RFID (14) par l'intermédiaire de l'unité d'antenne (3) à l'aide d'une unité d'émission et/ou de réception RFID (52) avec un signal d'entrée d'antenne RFID (33),
b) transmission sans fil d'au moins une grandeur caractéristique (29) spécifique au capteur de produit de lyophilisateur (1) de la deuxième branche de circuit (22), au moyen d'un signal de sortie d'antenne (35), par l'intermédiaire de l'unité d'antenne (3), à l'unité ou à une unité d'émission et/ou de réception RFID (52),
c) excitation d'une première branche de circuit (20) par une unité d'émission et/ou de réception de capteur (53), par l'intermédiaire de l'unité d'antenne (3) au moyen d'un signal d'entrée d'antenne de capteur (36), dans lequel un signal porteur et un signal d'excitation de capteur (38) sont superposés,
d) démodulation du signal d'entrée d'antenne de capteur (38) en un signal d'excitation de capteur (38) présentant une fréquence d'excitation de capteur et excitation du capteur (13) avec le signal d'excitation de capteur (38),
e) désactivation de l'excitation de la première branche de circuit (20) et donc désactivation de l'excitation du capteur (13) avec le signal d'excitation de capteur (38),
f) production d'un signal d'oscillation de capteur (39) du capteur (13) sur la base du comportement d'oscillation transitoire du capteur (13) à la suite de l'excitation précédente avec le signal d'excitation de capteur (38),
g) modulation du signal d'oscillation de capteur (39) avec un signal porteur en un signal de sortie d'antenne de capteur (37),
h) sollicitation de l'unité d'antenne (3) avec le signal de sortie d'antenne de capteur (37) et
i) transmission sans fil du signal de sortie d'antenne de capteur (37) de l'unité d'antenne (3) vers l'unité ou une unité d'émission et/ou de réception de capteur (53).
